# EUROPEAN PATENT SPECIFICATION

(11) **EP 0 851 790 B1**
(45) Date of publication and mention of the grant of the patent: **05.12.2001**
(21) Application number: 96924100.9
(22) Date of filing: 26.07.1996
(51) Int. Cl.: B01J 20/20, C09K 3/32, B08B 7/00

(54) **THE APPLICATION OF DRY SPREADABLE WATER DISPERSIBLE GRANULE COMPOSITIONS**
ANWENDUNG VON IM WASSER UND TROCKEN AUSSTREUBAREN DISPERGIERBAREN GRANULATZUSAMMENSETZUNGEN
APPLICATION DE COMPOSITIONS DE GRANULES DISPERSIBLES DANS L'EAU ET POUVANT ETRE EPANDUES A SEC

(30) Priority: 28.07.1995 US 1618; 22.05.1996 US 651076; 22.05.1996 US 651289
(43) Date of publication of application: 08.07.1998
(73) Proprietor: RHODIA INC., Cranbury, New Jersey 08512 (US); Aquatrols Holding Co., Inc., Wilmington, DE 19810 (US)
(72) Inventor: EINZIGER, Mark, David, Manalapan, NJ 07726 (US); FU, Edward, G., Kinnelon, NJ 07405 (US); STERN, Alan, Joseph, Hamilton, NJ 08619 (US); KOSTKA, Stanley, John, Cherry Hill, NJ 08034 (US); HOLROYD, Patrick, Michael, Cherry Hill, NJ 08002 (US)
(74) Representative: Kyle, Diana
(86) International application number: IB9600750
(87) International publication number: WO9704864

(56) References cited:
- DE-A- 4 000 142
- US-A- 3 960 763
- US-A- 4 395 357
- US-A- 4 585 753
- US-A- 4 817 647
- US-A- 5 380 350
- PATENT ABSTRACTS OF JAPAN vol. 3, no. 158 (M-086) & JP,A,54 134873 (MITSUBISHI RAYON), 19 October 1979,
- DATABASE WPI Week 8042 Derwent Publications Ltd., London, GB; AN 80-74199C XP002018135 & JP,A,55 114 343 (CHIYODA FELT) , 4 September 1980

## Description

### Field of the Invention

This invention relates to highly dispersible compositions and their use as an absorbent/adsorbent of undesirable compounds. Specifically, and illustrative of a preferred embodiment of this invention, the invention relates to surfactant-activated charcoal compositions for agricultural use in the form of dry spreadable granules and even more specifically to their use in the treatment of soil and turf that has been contaminated with pesticidal residue or other deleterious organic compounds, such as lubricating oil.

### Description of Prior Art and Problems

Organic pesticides are widely used in soil and turf both by consumers and commercial operators and together with organic spills and leaks of, for example oil from mowing, tilling and other agricultural equipment, cause significant residue problems.

At the outset, agricultural chemical residue can, of course, seriously contaminate the environment. For example, agricultural pesticides which are utilized extensively on golf courses can, via rainwater, eventually end up in an aquifer or reservoir and possibly contaminate local drinking water. This residual contamination of the environment by agricultural chemicals is a large social problem and every effort is being made to minimize its long term impact. Also, there are many situations wherein an immediate change in crop or other plant life such as grass, is desired and so the initial plant life is eliminated chemically. The success of the second planting or seeding obviously will require the absence of any significant amounts of pesticide or toxic chemical residue.

Numerous methods have been proposed to deactivate these toxic organic residues.

U.S. Patent No. 4,817,647 has proposed a method for removing oil spills from hydraulic mowing equipment on golf courses by utilizing an absorbent cover comprised of a non-woven mat of cellulose material. This mat is used sequentially with a detergent wash. Activated charcoal is a well known absorbent. It has been used in filters to detoxify water and other liquids; in gas masks for the purification of air; and various other applications. Therefore, it is not surprising that most of the prior art agricultural detoxification methods are also based on some activated charcoal usage. Typically, when used in a filter, the charcoal is in solid form, i.e., a bed of powder or granular material through which contaminated liquid or vapor is passed. However, for practical reasons, when large areas are to be treated, one must look to methods which permit a wide uniform distribution over the area requiring detoxification.

The use of activated charcoal for deactivation of various pesticides has been well documented (Jordan and Smith, Weed Source, Vol. 19, Issue 5 (Sept. 71) ppg. 541-544). In the Weed Source article, the material was used to absorb traces of pesticidal residues that could inhibit germination and/or establishment of turf or crop species. Unfortunately, the extremely high rates reported to be necessary to obtain satisfactory results have made its use relatively expensive and impractical for many widespread applications. As an aside, a few studies have been made in an attempt to determine the most effective activated charcoal vis-à-vis specific pesticide absorbency (Jordan and Smith, ibid.) and although superior absorption selections could be made among the charcoals tested, it was concluded that, with respect to absorbency, it seemed impossible to identify specifically a particular characteristic that correlated with absorption efficiency. In other words, pesticidal absorption efficiency could not be predicted from other properties of an activated charcoal.

Current formulations utilized for distributing activated charcoal uniformly over an area to be detoxified are either in the form of a dry powder; a wettable powder; a liquid suspension; a foam; or a dry granule. Although somewhat effective, each of the existing products identified above, has severe application limitations.

Dry carbon powders spread over large areas that are subsequently traversed by the public, such as golf course greens and fairways, cause undesirable aesthetic effects, e.g., blackened golfers shoes and socks. Wettable powders are normally suspended in water and applied to the site or locus to be treated with a sprayer. Subsequent to application, these products are "watered in" to improve distribution within the thatch and upper layers of the soil. These dry powders are extremely light, dusty, messy, i.e., hard to remove from surfaces, and difficult to wet. In addition, once wet, the powders form unstable suspensions and sediment. In order to maintain a reasonable dispersion in the tank and, thus, a uniform distribution on the locus, the aqueous suspension must be vigorously agitated. Furthermore, such powder suspensions cause excessive wear to the delivery equipment, such as the sprayer pumps and nozzles. Thus powder suspensions present extreme application difficulties for the intended end-user.

Liquid formulations of activated charcoal are normally low concentration suspensions, i.e., about 25 weight percent activated charcoal, in water. These formulations usually contain high loadings of suspension agents to ensure stability of the formulated product. Although these liquid products offer the advantage of ease of handling by avoiding the dusting, mixing, and application problems inherent with the use of powders, the low concentrations require the transport of large volumes of water. Additionally these formulations tend to become unstable after several temperature changes, for example, a freezing and thawing. Therefore, these liquid formulations also tend to be expensive to the end-user. U.S. Patent No. 4,585,753 (Scott et al.) discloses a typical liquid activated charcoal formulation for the treatment of contaminated soil and turf which, in order to deliver two hundred and twenty pounds (220 lbs.) of charcoal, requires about seven hundred and sixty pounds (760 lbs.) of water and sixty pounds (60 lbs.) of surfactants.

U.S. Patent No. 3,960,763 (Lambou et al.) discloses the use of activated charcoal foams for agricultural use, specifically to detoxify soil. Although these foams are stated to be low cost, with easy generation, zero toxicity and permit a uniform distribution of charcoal to the site, the charcoal concentrations are said to be on the order of 1-6% by weight. Aside from having to utilize a foam generator, one can easily see that the major problem attendant the liquid formulations is also present with foam applications, that is, the need to transport large volumes of water.

Granule forms of activated charcoal are also known in the art and overcome many of the problems of the powder, liquid and foam systems discussed above. However, although granular products are relatively easy to spread onto a soil or turf surface, the surface area of particle-affected surface to particle size is very low, i.e. too low for efficient absorption of the toxic compounds. As a result, it is necessary to overload the selected site with the granules which results in an expensive and often unsightly operation. Efforts to counteract this low dispersion efficiency usually take the form of attempting to optimize the charcoal substrate to the particular toxicant through trial and error (See Jordan and Smith, above). This approach can lower the total granule delivery amount to the site somewhat, but the extent of the coverage necessary to achieve the desired detoxification effect continues to make this procedure a commercially impractical one.

It is an object of the present invention to prepare dry spreadable activated charcoal granules which can be applied with a dry spreader to a target area and, when exposed to water via, for example, rain or irrigation, will not only readily decompose, but actively disperse so as to achieve disperse area to granule diameter ratios larger than that heretofore realized. These dry spreadable, water dispersible granules are easy to formulate, ship, store, and apply. The granules also possess very high activated charcoal loadings.

### Summary of the Invention

This invention discloses the use of certain water dispersible activated charcoal granule compositions as a dry spreadable material to deactivate organic residues of pesticides in soil and turf. The granule compositions utilize, in addition to the activated charcoal, from 5 to 40 weight percent of a surfactant composition designed to provide binding, rewetting and dispersion properties to the granules.

### Detailed Description of the Invention

The instant invention relates to the discovery of a dry spreadable, water dispersible activated charcoal granule which, when exposed to water, has a high dispersion area to granule diameter ratio. As a result, when the granules of this invention are dry spread and contacted with water, the area affected by the granule formulation is much enhanced over that realizable with the dry spreadable granules of the prior art. This enhanced dispersion area results in the use of less charcoal per unit area than heretofore achievable. By "contacted" with water is meant exposing the granules to an aqueous environment either through a natural occurrence, e.g., rain, or by means under the direction and/or planning of man, e.g., via a man-made irrigation system.

By activated charcoal is meant charcoal characterized by a large surface area per unit volume. This is the result of an enormous number of fine pores within the structure. Activated charcoal is derived from wood, cellulose, peat and coals of bituminous or lower rank by heating, usually at about 900°C for a brief period in air, carbon dioxide or steam to render it more porous and efficient. The enhanced absorption/adsorption properties of the activated charcoal result from the very large internal surface area, hence its valuable capacity to detoxify soil and turf from residual contaminants such as pesticides and/or oil.

The effective activated charcoal of this invention has a surface area of greater than 300 square meters per gram, preferably greater than 400 square meters per gram and a mean pore diameter of less than 100 angstroms; preferably less than 50 angstroms.

The surfactant composition of the present invention which is present at from 5 to 40 weight percent of the total granule composition, preferably from about 10 to about 25 weight percent, and most preferably from about 15 to about 20 weight percent, provides essentially three properties to the dry spreadable. water dispersible granules.

The first property that the surfactant composition must possess is that of being a binder for the particles in the granule so that after the processing and agglomerating water used in the initial preparation of the granule has been driven off, residual surfactant will act as a binder to form a hard, easily handleable, i.e., dry spreadable granule.

The second characteristic that the surfactant composition must possess is a good rewetting ability such that when the granule is applied to the site to be treated and exposed to water, the surfactant composition will enable the water to easily penetrate the interstices of the individual charcoal particles quickly, i.e., "wet" the internal surface areas of the particles. It is theorized that this rapid rewetting of the internal surfaces results in a displacement of the air initially entrapped within the particles which then provides an additional dispersion mechanism for the granules of this invention.

The third property that the surfactant composition must possess is the ability to aid in the breaking up and rapid dispersion of the particles initially in the granule.

In summary, the surfactant composition should possess the characteristic properties of being a good binder, rewetting agent, and dispersing aid. These properties could, of course, be found to a limited extent in a single component surfactant composition, but preferably at least a two-component composition is utilized. As will be noted below, polymeric or bulky dispersants often can function as acceptable binders. A three-component surfactant composition in which each surfactant is optimized for one of the aforedescribed, desired properties of the composition is most preferred.

The dispersants of the instant invention are usually present at from about 3 to about 20 weight percent; preferably from about 6 to about 10 weight percent based on the total weight of the granule composition. Although certain nonionics can function as dispersants, typically the high molecular weight materials, i.e., the polymerics, the preferred dispersant surfactants of this invention are the solid (at room temperature, i.e., 24°C), high molecular weight anionic surfactants.

The rewetting agents of the instant invention are usually present at from about 2 to about 20 weight percent, preferably from about 2 to about 3 weight percent based on the total weight of the granule composition. Although certain nonionics can function as rewetting agents, typically the low molecular weight materials, i.e., non-polymerics, the preferred rewetting surfactants of this invention are the solid (at room temperature), lower molecular weight anionic surfactants. These surfactants are selected for their ability to move more quickly in aqueous solutions than those anionics used as dispersants.

The binders for the granules of this invention, usually present from about 0 to about 10 weight percent, preferably from about 2 to about 6 weight percent based on the total weight of the granule composition, can be traditional binders well known in the art such as the starches, the sugars, etc., but preferably the granules of this invention use residuals or the secondary characteristics of the dispersing agents and/or rewetting agents described herein as the binding agents.

The anionics useful in the surfactant compositions of this invention include the alkyl and alkyl ether sulfates. These materials have the respective formulae ROSO₃M and RO(C₂H₄O)ₓ SO₃M wherein R is an alkyl, alkenyl or alkylauryl group of about 8 to about 22 carbon atoms, x is 1 to 10, preferably 1 to 4, and M is a water-soluble cation such as ammonium, sodium, potassium, magnesium, triethanolamine (TEA), etc. The alkyl ether sulfates useful in the present invention are condensation products of ethylene oxide and monohydric alcohols having about 8 to about 22 carbon atoms. Specific examples of the above sulfates include ammonium lauryl sulfate, magnesium lauryl sulfate, sodium 2-ethyl-hexyl sulfate, sodium actyl sulfate, sodium oleyl sulfate, sodium tridecyl sulfate, triethanolamine lauryl sulfate, ammonium linear alcohol, ether sulfate ammonium nonylphenol ether sulfate, and ammonium monoxynol-4-sulfate.

Another suitable class of anionic surfactants are the water-soluble salts of the general formula:

R₁-SO₃-M

wherein R₁ is selected from the group consisting of:
i) a straight or branched chain, saturated aliphatic hydrocarbon radical having from 8 to 24, preferably 12 to 18 carbon atoms;
ii) a mono-, di-, or tri- C₁ - C₆ alkyl substituted aryl wherein the aryl is preferably a phenyl or naphthyl group;
iii) alpha-olefins having 12 to 24 carbon atoms, preferably 14 to 16 straight chain carbon atoms, most preferably 1-dodecene, 1-tetradecene, 1-hexadecene, 1-octadecene, 1-eicosene, and 1-tetracosene; and
iv) naphthalene-formaldehyde condensation products.

Specific examples include Supragil MNS/90, a trademark of Rhône-Poulenc Inc. for an alkylnaphthalenesulfonate-formaldehyde condensate and Supragil WP, a trademark of Rhône-Poulenc Inc. for an alkylnaphthalenesulfonate.

Additional examples of anionic synthetic surfactants which come within the terms of the present invention are: i) the isethionates, i.e., the reaction products of fatty acids esterified with isethionic acid and neutralized with sodium hydroxide where, for example, the fatty acids are derived from coconut oil; and ii) the n-methyl taurates, i.e., the sodium or potassium salts of fatty acid amides of methyl tauride in which the fatty acids, for example, are derived from coconut oil. Other anionic synthetic surfactants of this variety are set forth in U.S. Pat. Nos. 2,486,921; 2,486,922; and 2,396,278.

Still other anionic synthetic surfactants include the classes designated as the sulfosuccinates and sulfo succinamates.

These are of the general formulae: 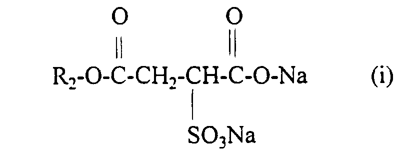 and 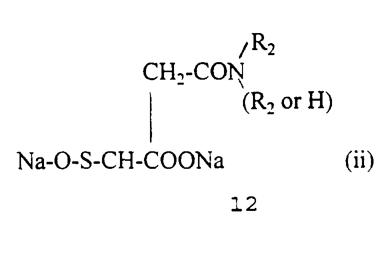 respectively,
wherein R₂ is a C₂-C₂₀ alkyl or alkylamido. These classes include such surface active agents as disodium N-octadecylsulfo-succinamate; tetrasodium N-(1,2-dicarboxyethyl)-N-octadecylsulfo-succinamate; diamyl ester of sodium sulfosuccinic acid; dihexyl ester of sodium sulfosuccinic acid; and dioctyl esters of sodium sulfosuccinic acid.

Another class of anionic organic surfactants are the *B*-alkyloxy alkane sulfonates. These compounds have the following formula: 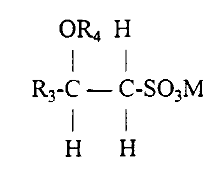 where R₃ is a straight chain alkyl group having from 6 to 20 carbon atoms, R₄ is a lower alkyl group having from 1 to 3 carbon atoms, and M is a water-soluble cation as hereinbefore described.

Specific examples of *B*-alkyloxy-alkane-1-sulfonates, or alternatively 2-alkyloxyalkane-1-sulfonates include:
potassium-*B*-methoxydecanesulfonate, sodium 2-methoxy-tridecanesulfonate.
potassium 2-ethoxytetradecyl-sulfonate, sodium 2-isopropoxyhexadecylsulfonate,
lithium 2-t-butoxytetradecylsulfonate, sodium *B*-methoxyoctadecylsulfonate, and
ammonium *B*-n-propoxydodecylsulfonate.

Also to be included in the anionic class of surfactants are the disulfonates of the general formula: 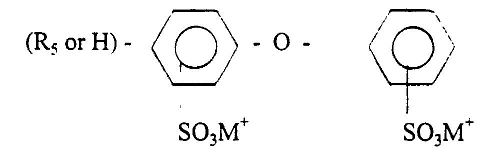 wherein R₅ is a C₈-C₂₀ alkyl group and M is a water-soluble cation as hereinabove described. The preferred anionics of the disulfonate class are disodium dodecyl diphenyloxide disulfonate and ethoxylated nonylphenyl ammonium disulfonate. All of the above-described anionic surfactants and mixtures thereof may or may not be ethoxylated with from about 1 to about 10 ethylene oxide units per "R" unit.

Also useful as a dispersant surfactant for the granules of the instant invention are the alkali and alkali earth metal salts of the lignosulfonates.

Illustrative of the nonionics which are useful in the surfactant compositions of this invention include the following:
A) Amides such as:
   i) Alkanolamides of the formula - 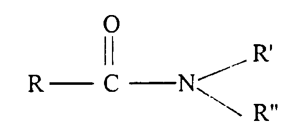 wherein R' and R" each can be -H, -CH₂CH₂OH, or 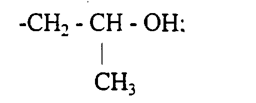
   ii) ethoxylated alkanolamides of the formula - 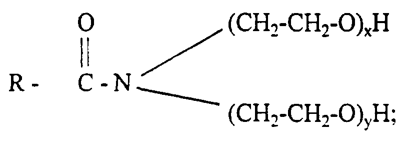 and
   iii) ethylene bisamides of the formula - 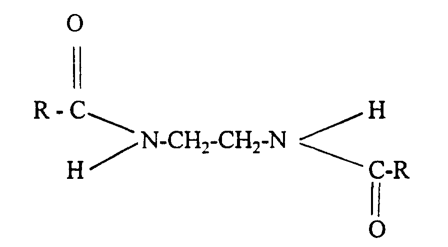
B) Esters such as:
   i) fatty acid esters of the formula - 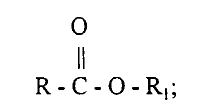
   ii) glycerol esters of the formula - 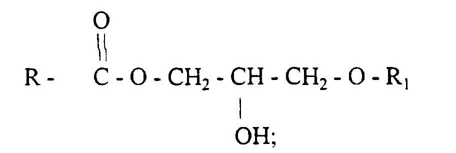
   iii) ethoxylated fatty acid esters of the formula - 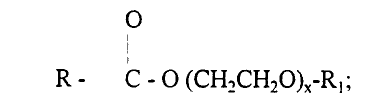
   iv) sorbitan esters of the formula - 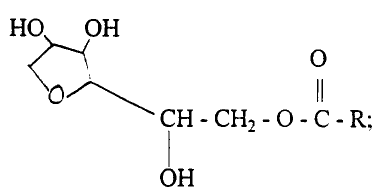 and
   v) ethoxylated sorbitan esters of the formula - 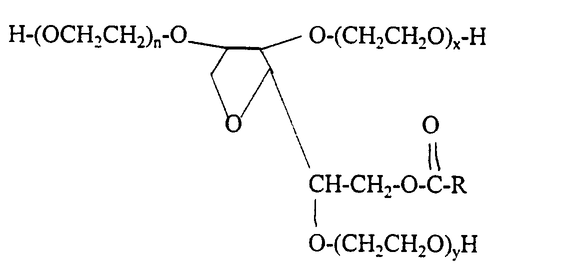
C) Ethoxylates such as:
   i) alkylphenol ethoxylates of the formula - 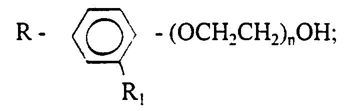
   ii) alcohol ethoxylates of the formula -

      R - O-(CH₂CH₂O)ₙH;
   iii) tristyrylphenol ethoxylates of the formula - 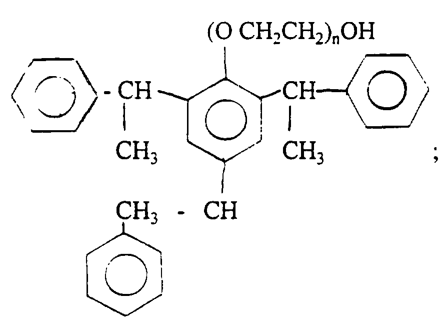 and
   iv) mercaptan ethoxylates of the formula -

      R - S - (CH₂CH₂O)ₙH
D) End-capped and EO/PO block copolymers such as:
   i) alcohol alkoxylates of the formula - 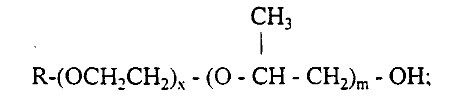
   ii) ethylene oxide/propylene oxide block copolymers of the formula - 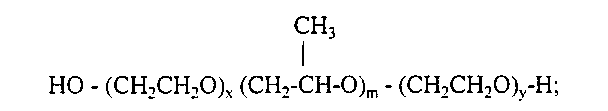
   iii) copolymers of the formula - 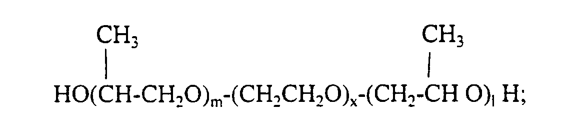
   iv) chlorine capped ethoxylates of the formula -

      R - (OCH₂CH₂)ₓCl; and
   v) tetra-functional block copolymers of the formula - 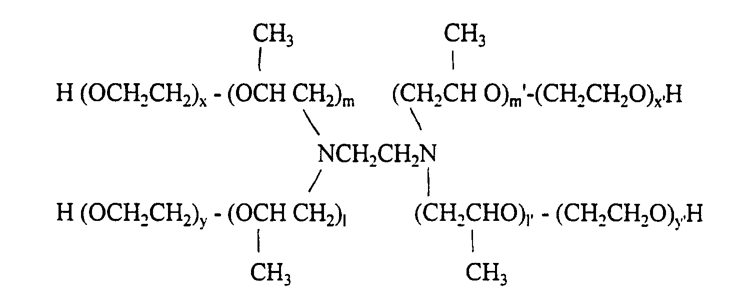 or 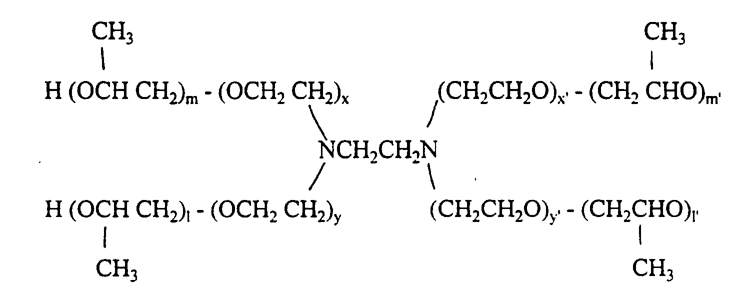
wherein
R is a fatty alkyl group, preferably a C₆ - C₂₂ fatty alkyl group, most preferably a C₈ - C₁₈ fatty alkyl group;
R₁ is -H or a fatty alkyl group, preferably -H or a C₆ - C₂₂ fatty alkyl group, most preferably -H or a C₈ - C₁₈ fatty alkyl group;
x, x', y, y' and n are each independently moles of ethylene oxide preferably 1 to 300; most preferably 1 to 150; and
m, m', l and l' are each independently moles of propylene oxide, preferably 1 to 300; most preferably 1 to 150.

Among the preferred dispersing agents are: the alkylnaphthalenesulfonate-formaldehyde condensates; sodium lignosulfonate, diphenyloxide, ethoxylated tristyrylphenol ethoxylates, ethoxylated tristyrylphenol phosphates, the ethylene oxide/propylene oxide block copolymers, and acid, salts and copolymers of the polyacrylates.

Among the preferred rewetting agents are: the alkylnaphthalenesulfonates, sodium methyloleoyl taurate, the sulfosuccinates, the carboxylates, the alkylarylsulfonates, the ethoxylated alkyl phenols and the ethoxylated alcohols.

Although electrostatic dispersants such as the anionics are preferred, steric dispersants such as the polyvinyl alcohols can also be used.

Although the dry spreadable, water dispersible granules of this invention can be prepared by a standard pan granulation process, it is preferred to prepare the granules via an extrusion process. The extrusion granulation process is as follows: First, each component is weighed and dry blended in a double ribbon blender. Water is then added with continuous mixing until from about 15 to about 25 weight percent, preferably about 20% moisture content is realized. The mixture is then fed to a low pressure single screw extruder and a sufficient amount of additional water is added, usually from about 10 to about 40 weight percent of the total weight of the mix, preferably from about 10 to about 13% to produce a semi-cohesive wet mass which is suitable for extrusion. The wet mass is extruded through a die having openings with diameters of from about 0.8 mm to about 1.6 mm, preferably about 1 mm. The extrudate is then fed to a vibratory fluidized bed dryer which reduces the moisture content to below about 4; preferably to below about 2.5 weight percent; the weight percents being based on the total weight of the composition at that respective step in the process. The product is then sieved in a particle classifier to remove oversized and undersized granules. It is preferred that the final product is that which passes through a 10 mesh screen but will not pass through a 60 mesh screen.

A characteristic of the dry spreadable, water dispersible charcoal granules of this invention is the speed with which the granules disperse in water. When the granules of this invention are gently placed on the surface of cold tap water (about 20°C) in, for example, a beaker, the granules, with no mechanical energy input, will completely disperse within forty (40) to one hundred (100) seconds. Most conventional water dispersible granules require from five (5) to thirty (30) or more inversions of the beaker to effect a similar result in a similar time period.

The present invention is demonstrated in detail in the following non-limiting working examples.

### Examples 1-7

A series of dry spreadable, water dispersible granules was prepared as described above using seven different charcoals. The Surface Area, Pore Volume and Mean Pore Diameters of each of the charcoals utilized and their identities are as listed below in Table I. The formulation for all seven granules was as follows:

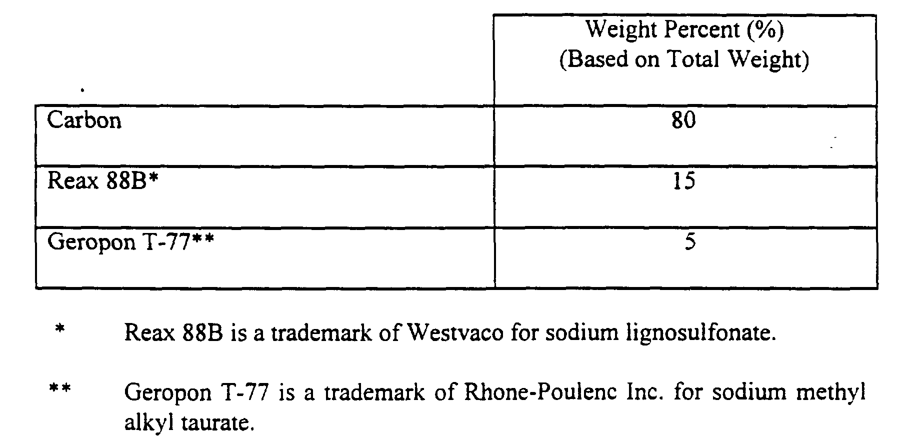

A granule expansion test was conducted on each of the samples as follows:
1) The diameters of ten (1) granules were measured with a set of calipers and the average diameter D₁ calculated.
2) The ten (10) granules were scattered on a porous water absorbent substrate, i.e., a paper towel.
3) Two drops of water were added to each granule and allowed to stand for one minute.
4) The diameters of the wet granules were measured with the calipers and the average diameter D₂ calculated.
5) The Expansion Ratio was calculated as D₂ / D₁.
The results of the above granule expansion tests are as indicated below in Table I.

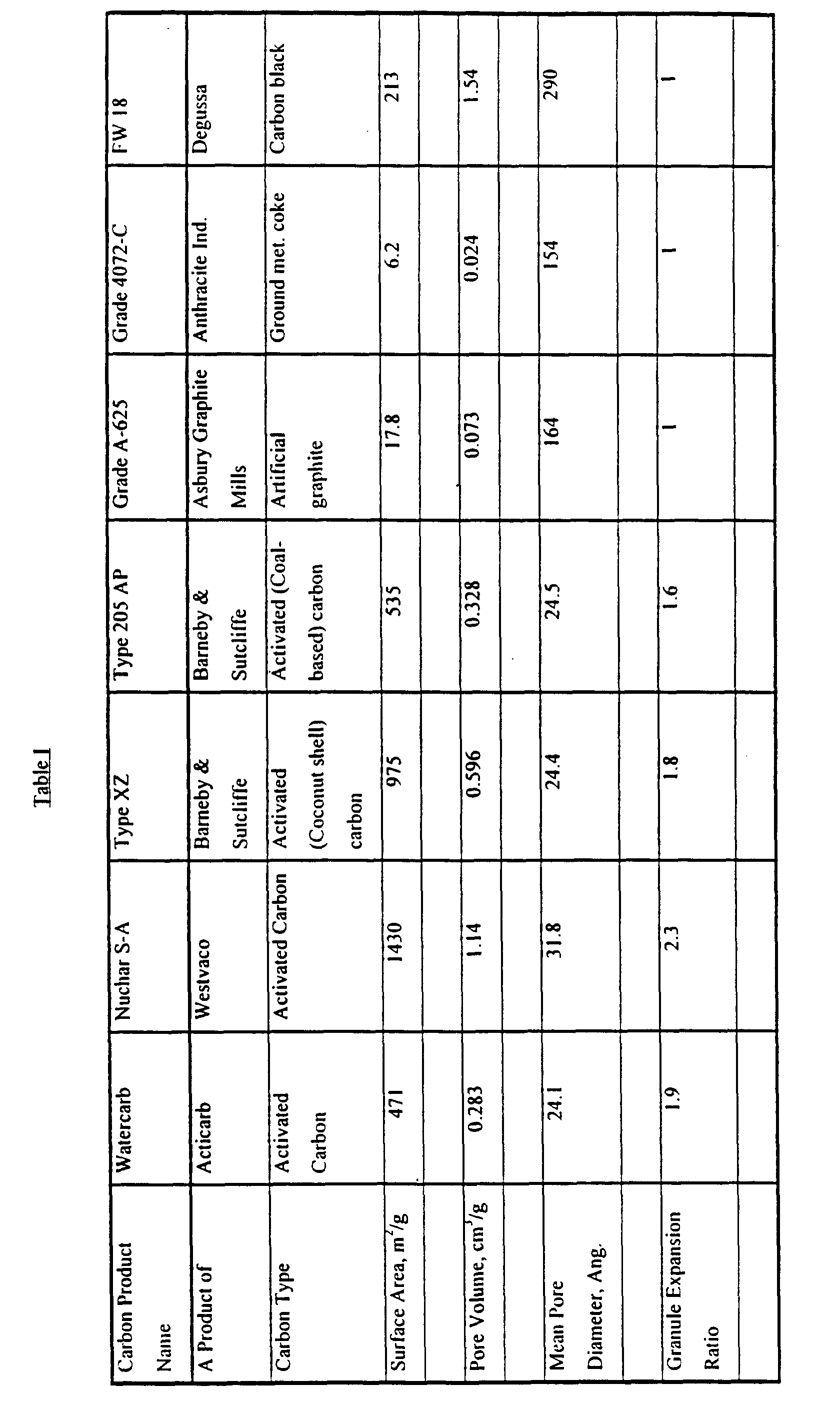

It is apparent from the above results that the dry spreadable, water dispersible activated charcoal granules of the present invention, i.e., those having surface areas in excess of 300 square meters per gram and mean pore diameters of less than 100 angstroms have unexpected superior dispersing characteristics when exposed to a water environment.

Although not to be considered limiting in any way on the scope of the invention, it is proposed that the following mechanism may be responsible for the extraordinary dispersion of the granules of this invention when water is placed in intimate contact with them. In addition to the dissolution and weakening of the binding material, air, which is initially entrapped within the interstices of the particles comprising the granules, i.e. within the porous structure of the formulated, granule compositions, is released and/or displaced when a liquid enters the pores. This expands the volume or increases the pressure within the wetted granule thus aiding in its disintegration and enhancing its dispersion.

Based on this hypothesis, the granule expansion should be approximately proportional to the internal pore volume. The data in Table I indicates that the granule expansion results are, in fact, in general agreement with the Surface Area and Pore Volume measurements.

### Examples 8-15

It has also been discovered that the friability of the granules of this invention can be reduced with small to negligible effect on granule disintegration and/or dispersion in water via the addition of a small amount, i.e., up to 8 weight percent; preferably from about 1 to 6 weight percent, more preferably from about 2 to 5 weight percent based on the total weight of the granule, of a nonionic surfactant, preferably a polyethylene glycol/polypropylene glycol (EO/PO) block copolymer.

A series of dry spreadable. water dispersible granules was prepared as in Examples 1-7 using various levels of Antarox P-104, (a trademark of Rhone-Poulenc for an EO/PO block copolymer). As the weight percent of the block copolymers (x) was increased, an equivalent weight percent of the primary dispersant, Supragil MNS-90 was removed.

The formulation for all the examples in this series was as follows:

| | Weight Percent (%) (Based on Total Weight) |
|---|---|
| Acticarb Carbon | 85 |
| Supragil MNS/90* | 8 - x |
| Supragil WP** | 3 |
| Soprophor S/40-P *** | 4 |
| Antarox P-104 | x |

| | |
|---|---|
| * Supragil MNS/90 is a trademark of Rhône-Poulenc Inc. for an alkylnaphthalenesulfonate-formaldehyde condensate. | |
| ** Supragil WP is a trademark of Rhône-Poulenc Inc. for an alkylnaphthalenesulfonate | |
| *** Soprophor S/40-P is a trademark of Rhône-Poulenc Inc. for a tristyrylphenol ethoxylate. | |

The friability was determined using a Van Kel friabilator set for 500 revolutions. Fifteen (15) grams of granules were used. The friability reported in Table 2 below is the percentage of the initial 15 grams that was lost as "fines" during the test.

Residual moisture was determined using a moisture balance.

**Table 2**

| Antarox P-104(%) x | Friability(%) | Moisture(%) |
|---|---|---|
| 0 | 4 | 2.5 |
| 1 | 2.3 | 5.1 |
| 2 | 1 | 5.2 |
| 3 | 1 | 4.3 |
| 4 | 0 | 4.5 |
| 5 | 0 | 2.2 |
| 6 | 1 | 4.9 |
| 8 | 1.3 | 3.5 |

Thus, it is observed that the friability of the granules can largely be eliminated via the use of a nonionic surfactant, if one desires to do so.

### Examples 16-18

A dry spreadable, water dispersible granule of this invention was prepared as the samples were prepared in Examples 1-7 with the following formulation:

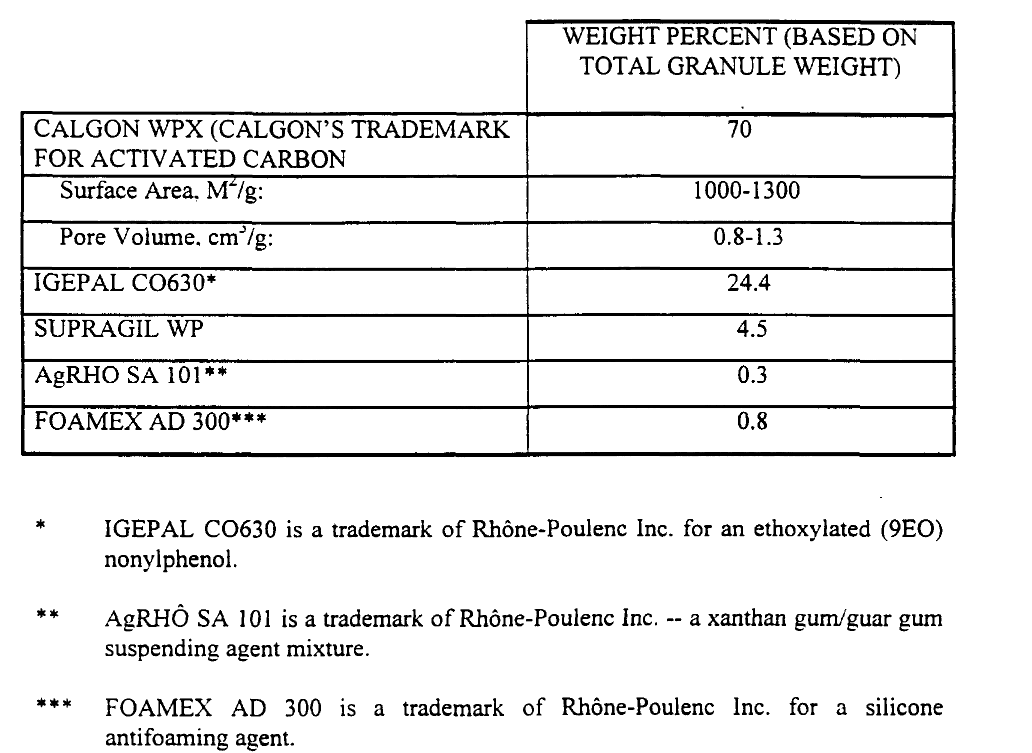

This material is identified herein as Clean Carbon 70 WDG. Clean Carbon is a trademark of Aquatrols Corporation for activated charcoal, water dispersible granules. A number of test plots containing P. annua grass were treated with the selective herbicide KERB 50 WP, a trademark of Rohm and Haas Co. for 3, 5-dichloro-N(1,1-dimethyl-2-propyl) benzamide (common names, pronamide (WSSA) and propyzamide) fifteen days before overseeding the plots with the perennial ryegrass Lolium perenne (L per.).

A second number of test plots containing P. annua grass were also treated with the Kerb herbicide fifteen days before overseeding the plots with the Lolium perenne: however, in addition, two days before the overseeding, the plots were treated with Clean Carbon 70 WDG.

Details of the above tests and the results, expressed as the percentage of the Lolium perenne that germinated, are given in Table 3 below.

**Table 3**

| Treatment | Rate | Growth Stage | L. per. Density 0-100% 30 DAO* | L. per. Density 0-100% 60 DAO | L. per. Density 0-100% 90 DAO |
|---|---|---|---|---|---|
| Kerb 50 WP | 21bai/ac | 15 DBO** | 32.5 | 36.3 | 70.0 |
| Kerb 50 WP | 21bai/ac | 15 DBO | 65.0 | 62.5 | 86.3 |
| Clean Carbon 70 WDG | 5ai/1000 ft² | 2 DBO | | | |
| Untreated | | | 83.8 | 88.8 | 95.0 |

| | | | | | |
|---|---|---|---|---|---|
| * DAO means days after overseeding. | | | | | |
| ** DBO means days before overseeding. | | | | | |

The untreated results are indicative of the normal L per. germination rates expected in an untreated plot. One can see by the above results, the significant detoxification effects realized by application of the highly dispersible, activated charcoal granules of the instant invention.

Of course, it is recognized that the water dispersible granules in this invention can be tank mixed under practices well known in the agricultural art and their suspensions are superior to currently used granules with no adverse effects on the application machinery.

## Claims

1. A dry spreadable, water dispersible granular composition, comprising:
a) from 60 to 95 weight percent of activated charcoal having an internal surface area of greater than 300 square meters per gram and a mean pore diameter of less than 100 angstroms; and
b) from 5 to 40 weight percent of a surfactant composition comprising a surfactant selected from the group consisting of nonionics, anionics, and combinations thereof, wherein the weight percents are based on the total weight of the granular composition.

2. The dry spreadable, water dispersible granular composition of claim 1 wherein the surfactant composition comprises:
i) from 3 to 20 weight percent of a high molecular weight nonionic or anionic surfactant dispersant;
ii) from 2 to 20 weight percent of a low molecular weight nonionic or anionic surfactant rewetting agent; and
iii) from 0 to 10 weight percent of a binder.

3. The dry spreadable, water dispersible granular composition of claim 2 wherein the binder comprises:
i) a high molecular weight nonionic or anionic surfactant dispersant, or
ii) a low molecular weight nonionic or anionic surfactant rewetting agent.

4. The dry spreadable, water dispersible granular composition of claim 2 wherein:
i) the surfactant dispersant is a high molecular weight anionic; and
ii) the surfactant rewetting agent is a low molecular weight anionic.

5. The dry spreadable, water dispersible granular composition of claim 2 wherein the anionic surfactant is selected from the group consisting of:
i) alkyl and alkyl ether sulfates;
ii) water soluble salts of the formula:
R₁ - SO₃-M
wherein R₁ is selected from the group consisting of
i) a straight or branched chain, saturated aliphatic hydrocarbon radical having from 8 to 24, preferably 12 to 18 carbon atoms;
ii) a mono-, di-, or tri- C₁ - C₆ alkyl substituted aryl wherein the aryl is preferably a phenyl or naphthyl group;
iii) alpha-olefins having 12 to 24 carbon atoms, preferably 14 to 16 straight chain carbon atoms, most preferably 1-dodecene, 1-tetradecene, 1-hexadecene, 1-octadecene, 1-eicosene, and 1-tetracosene; and
iv) naphthalene-formaldehyde condensation products.
iii) isethionates;
iv) N-methyl taurates;
v) sulfosuccinates;
vi) sulfosuccinamates;
vii) B-alkoxy alkane sulfonates;
viii) disulfonates;
ix) alkali or alkali earth metal salts of lignosulfonates;
x) ethoxylated derivatives of the above-identified anionic surfactants; and
xi) mixtures thereof.

6. The dry spreadable, water dispersible granular composition of claim 2 wherein the nonionic surfactant is selected from the group consisting of
A) Amides such as:
i) Alkanolamides of the formula - 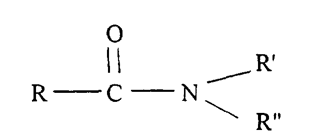 wherein R' and R" each can be -H, -CH₂CH₂OH, or 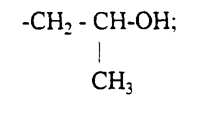
ii) ethoxylated alkanolamides of the formula - 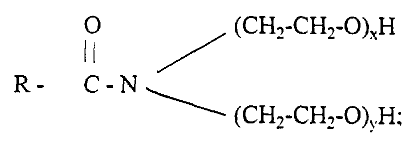 and
iii) ethylene bisamides of the formula - 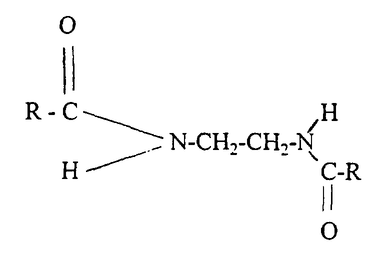
B) Esters such as:
i) fatty acid esters of the formula - 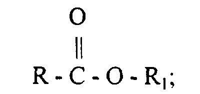
ii) glycerol esters of the formula - 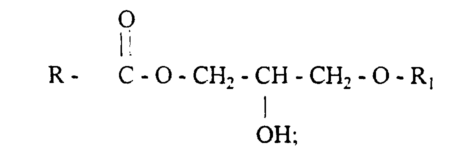
iii) ethoxylated fatty acid esters of the formula - 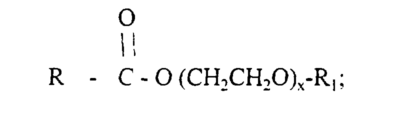
iv) sorbitan esters of the formula - 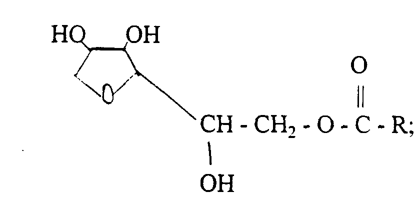 and
v) ethoxylated sorbitan esters of the formula - 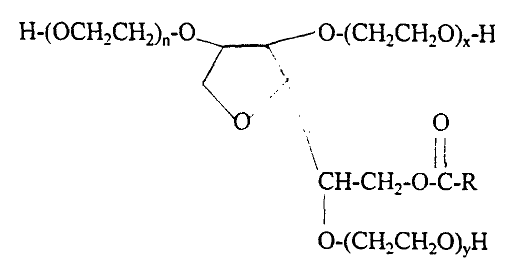
C) Ethoxylates such as:
i) alkylphenol ethoxylates of the formula - 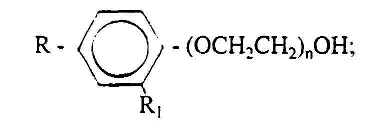
ii) alcohol ethoxylates of the formula -
R - O - (CH₂CH₂O)ₙH;
iii) tristyrylphenol ethoxylates of the formula - 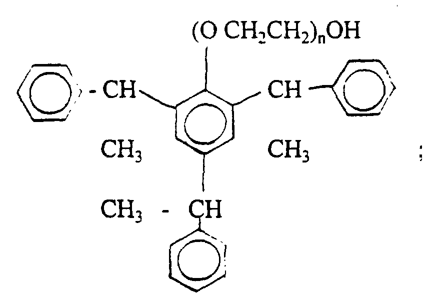 and
iv) mercaptan ethoxylates of the formula -
R - S - (CH₂CH₂O)ₙH
D) End-capped and EO/PO block copolymers such as:
i) alcohol alkoxylates of the formula - 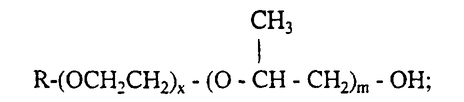
ii) ethylene oxide/propylene oxide block copolymers of the formula - 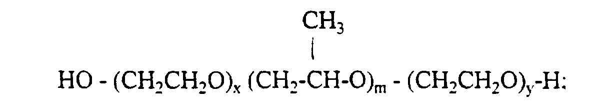
iii) copolymers of the formula - 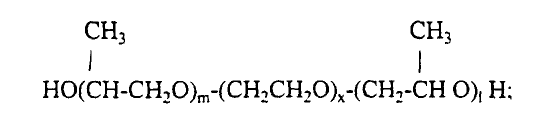
iv) chlorine capped ethoxylates of the formula -
R - (OCH₂CH₂)ₓCl;
v) tetra-functional block copolymers of the formula - 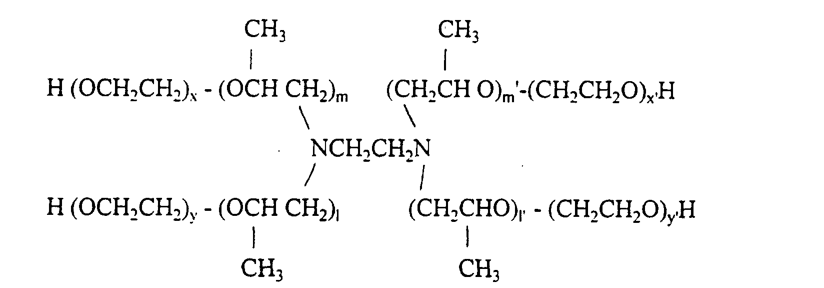 or 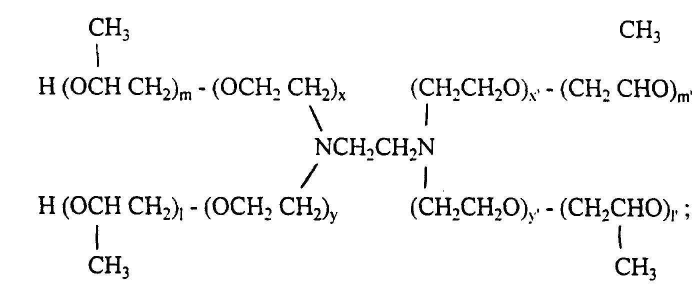 and
E) Mixtures thereof;
wherein
R is a fatty alkyl group, preferably a C₆ - C₂₂ fatty alkyl group, most preferably a C₈ - C₁₈ fatty alkyl group;
R₁ is -H or a fatty alkyl group, preferably -H or a C₆ - C₂₂ fatty alkyl group, most preferably -H or a C₈ - C₁₈ fatty alkyl group;
x, x', y, y' and n are each independently moles of ethylene oxide preferably 1 to 300: most preferably 1 to 150;
m, m', l and l' are each independently moles of propylene oxide, preferably 1 to 300; most preferably 1 to 150.

7. The dry spreadable. water dispersible granular composition of claim 1 wherein the activated charcoal has an internal surface area of greater than 400 square meters per gram and a mean pore diameter of less than 50 angstroms.

8. The dry spreadable, water dispersible granular composition of claim 1 comprising:
a) from 80 to 95 weight percent of the activated charcoal;
b) from 3 to 10 weight percent alkylnaphthalenesulfonate-formaldehyde condensate;
c) from 1 to 5 weight percent alkylnaphthalenesulfonate; and
d) from 1 to 5 weight percent tristyrylphenol ethoxylate.

9. The dry spreadable. water dispersible granular composition of claim 8 additionally comprising:
from 1 to 6 weight percent of a nonionic, ethylene oxide/propylene oxide block copolymer.

10. A process for preparing a dry spreadable, water dispersible granular composition comprising the steps of:
i) blending
a) from 60 to 95 weight percent of activated charcoal having an internal surface area of greater than 300 square meters per gram and a mean pore diameter of less than 400 angstroms with
b) from 5 to 40 weight percent of a surfactant composition comprising surfactants selected from the group consisting of nonionics, anionics, and combinations thereof;
ii) adding sufficient water with continuous mixing to form a mixture with a moisture content of from 15 to 25 weight percent;
iii) adding from 10 to 40 weight percent of additional water to said mixture to form a semi-cohesive wet mass;
iv) forming an extrudate by extruding said wet mass through an extruder die having openings with diameters of from 0.8 mm to 2.0 mm; and
v) drying the extrudate to a moisture content below 4 weight percent: wherein all of the weight percents are based on the total weight of the compositions at the respective step in the process.

11. A method of reducing undesirable bioactivity in a site contaminated with an organic compound comprising the steps of:
i) spreading upon the site a bioactivity-reducingly effective amount of the granular composition of claim 1; and
ii) contacting said granular composition with water

12. The method claim 11 wherein said organic compound is a pesticide.

13. The method of claim 12 wherein said surfactant composition comprises:
i) from 3 to 20 weight percent of a high molecular weight nonionic or anionic surfactant dispersant;
ii) from 2 to 20 weight percent of a low molecular weight nonionic or anionic surfactant reweiting agent; and
iii) from 0 to 10 weight percent of a binder.

14. The method of claim 13 wherein said binder comprises:
i) a high molecular weight nonionic or anionic surfactant dispersant, or
ii) a low molecular weight nonionic or anionic surfactant rewetting agent.

15. The method of claim 13 wherein:
i) the surfactant dispersant is a high molecular weight anionic; and
ii) the surfactant rewetting agent is a low molecular weight anionic.

16. The method of claim 13 wherein the anionic surfactant is selected from the group consisting of:
i) alkyl and alkyl ether sulfates;
ii) water soluble salts of the formula:
R₁ - SO₃ - M
wherein R₁ is selected from the group consisting of
i) a straight or branched chain, saturated aliphatic hydrocarbon radical having from 8 to 24, preferably 12 to 18 carbon atoms;
ii) a mono-, di-, or tri- C₁ - C₆ alkyl substituted aryl wherein the aryl is preferably a phenyl or naphthyl group;
iii) alpha-olefins having 12 to 24 carbon atoms, preferably 14 to 16 straight chain carbon atoms, most preferably 1-dodecene, 1-tetradecene, 1-hexadecene, 1-octadecene. 1-eicosene. and 1-tetracosene; and
iv) naphthalene-formaldehyde condensation products.
iii) isethionates;
iv) N-methyl taurates;
v) sulfosuccinates;
vi) sulfosuccinamates;
vii) B-alkoxy alkane sulfonates;
viii) disulfonates;
ix) alkali or alkali earth metal salts of lignosulfonates;
x) ethoxylated derivatives of the above-identified anionic surfactants; and
xi) mixtures thereof.

17. The method of claim 13 wherein the nonionic surfactant is selected from the group consisting of:
A) Amides such as:
i) Alkanolamides of the formula - 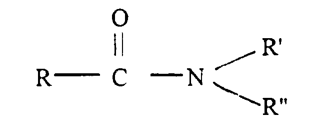 wherein R' and R" each can be -H, -CH₂CH₂OH, or 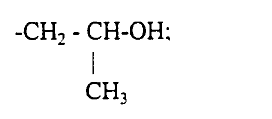
ii) ethoxylated alkanolamides of the formula - 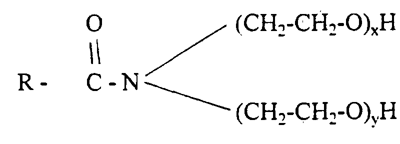 and
iii) ethylene bisamides of the formula - 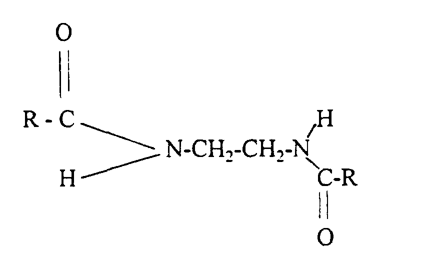
B) Esters such as:
i) fatty acid esters of the formula - 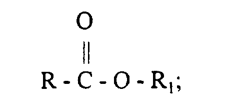
ii) glycerol esters of the formula - 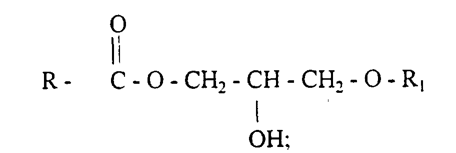
iii) ethoxylated fatty acid esters of the formula - 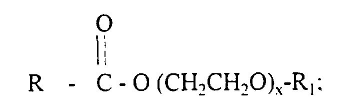
iv) sorbitan esters of the formula - 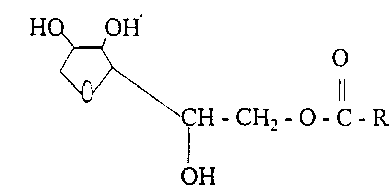 and
v) ethoxylated sorbitan esters of the formula - 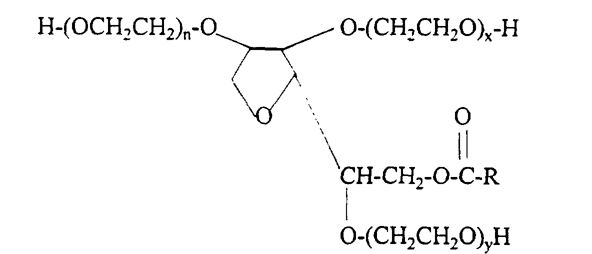
C) Ethoxylates such as:
i) alkylphenol ethoxylates of the formula - 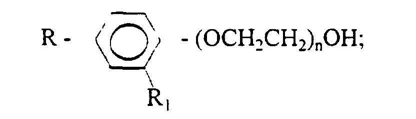
ii) alcohol ethoxylates of the formula -
R - O - (CH₂CH₂O)ₙH;
iii) tristyrylphenol ethoxylates of the formula - 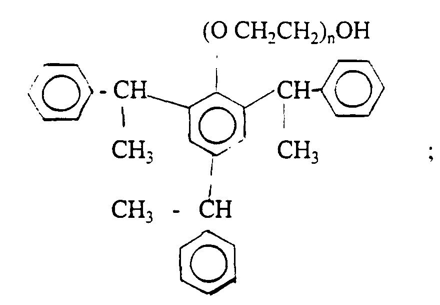 and
iv) mercaptan ethoxylates of the formula -
R - S - (CH₂CH₂O)ₙH
D) End-capped and EO/PO block copolymers such as:
i) alcohol alkoxylates of the formula - 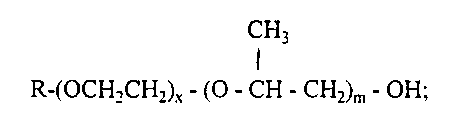
ii) ethylene oxide/propylene oxide block copolymers of the formula - 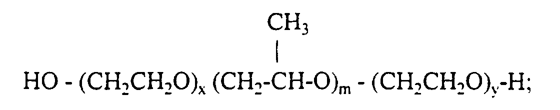
iii) copolymers of the formula - 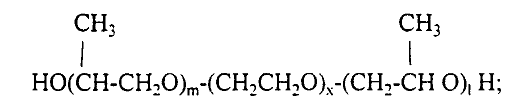
iv) chlorine capped ethoxylates of the formula -
R - (OCH₂CH₂)ₓCl;
v) tetra-functional block copolymers of the formula - 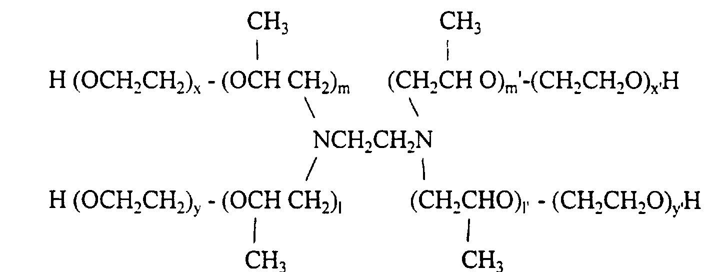 or 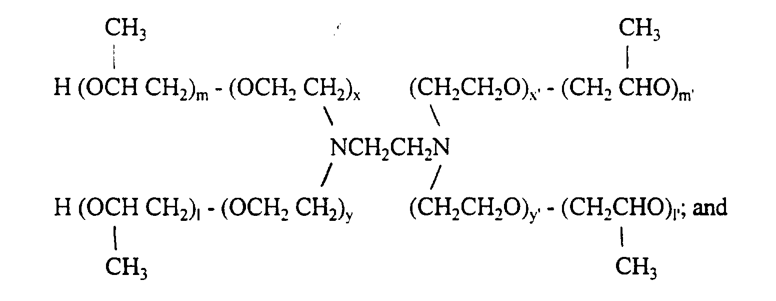
E. Mixtures thereof;
wherein
R is a fatty alkyl group, preferably a C₆ - C₂₂ fatty alkyl group, most preferably a C₈ - C₁₈ fatty alkyl group;
R₁ is -H or a fatty alkyl group, preferably -H or a C₆ - C₂₂ fatty alkyl group, most preferably -H or a C₈ - C₁₈ fatty alkyl group;
x. x', y, y' and n are each independently moles of ethylene oxide preferably 1 to 300; most preferably 1 to 150;
m, m', l and l' are each independently moles of propylene oxide, preferably 1 to 300; most preferably 1 to 150.

18. The method of claim 11 wherein the activated charcoal has an internal surface area of greater than 400 square meters per gram and a mean pore diameter of less than 50 angstroms.

19. The method of claim 11 wherein the composition is as defined in claim 8.

20. The method of claim 19 wherein the granular composition additionally comprises: from 1 to 6 weight percent of a nonionic, ethylene oxide/propylene oxide block copolymer.

## Patentansprüche

1. Trockenausbreitbare, wasserdispergierbare granuläre Zusammensetzung, umfassend:
a) von 60 bis 95 Gew.-% Aktivkohle mit einer internen Oberfläche von über 300 Quadratmeter pro Gramm und einem mittleren Porendurchmesser von weniger als 100 Angström; und
b) von 5 bis 40 Gew.-% einer Zusammensetzung aus grenzflächenaktiven Mitteln, umfassend ein grenzflächenaktives Mittel, ausgewählt aus der Gruppe bestehend aus nichtionischen, anionischen, grenzflächenaktiven Mitteln und Kombinationen davon, wobei die Gew.-% auf das Gesamtgewicht der granulären Zusammensetzung bezogen sind.

2. Trockenausbreitbare, wasserdispergierbare granuläre Zusammensetzung nach Anspruch 1, wobei die Zusammensetzung aus grenzflächenaktiven Mitteln umfasst:
i) von 3 bis 20 Gew.-% eines nichtionischen oder anionischen grenzflächenaktiven Dispersionsmittels mit hohem Molekulargewicht;
ii) von 2 bis 20 Gew.-% eines nichtionischen oder anionischen grenzflächenaktiven Wiederbenetzungsmittels mit niedrigem Molekulargewicht; und
iii) von 0 bis 10 Gew.-% eines Bindemittels.

3. Trockenausbreitbare, wasserdispergierbare granuläre Zusammensetzung nach Anspruch 2, wobei das Bindemittel umfasst:
i) ein nichtionisches oder anionisches grenzflächenaktives Dispersionsmittel mit hohem Molekulargewicht oder
ii) ein nichtionisches oder anionisches grenzflächenaktives Wiederbenetzungsmittel mit niedrigem Molekulargewicht.

4. Trockenausbreitbare, wasserdispergierbare granuläre Zusammensetzung nach Anspruch 2, wobei:
i) das grenzflächenaktive Dispersionsmittel ein anionisches Mittel mit hohem Molekulargewicht ist; und
ii) das grenzflächenaktive Wiederbenetzungsmittel ein anionisches Mittel mit niedrigem Molekulargewicht ist.

5. Trockenausbreitbare, wasserdispergierbare granuläre Zusammensetzung nach Anspruch 2, wobei das anionische grenzflächenaktive Mittel ausgewählt ist aus der Gruppe bestehend aus:
i) Alkyl- und Alkylethersulfaten;
ii) wasserlöslichen Salzen der Formel:
R₁-SO₃-M,
wobei R₁ ausgewählt ist aus der Gruppe bestehend aus
i) einer geradkettigen oder verzweigtkettigen, gesättigten aliphatischen Kohlenwasserstoffgruppe mit 8 bis 24, bevorzugt 12 bis 18 Kohlenstoffatomen;
ii) einem mono-, di- oder tri-C₁-C₆-alkylsubstituierten Aryl, wobei das Aryl bevorzugt eine Phenyl- oder Naphthylgruppe ist;
iii) alpha-Olefinen mit 12 bis 24 Kohlenstoffatomen, bevorzugt 14 bis 16 geradkettigen Kohlenstoffatomen, am meisten bevorzugt 1-Dodecen, 1-Tetradecen, 1-Hexadecen, 1-Octadecen, 1-Eicosen und 1-Tetracosen; und
iv) Naphthalin-Formaldehyd-Kondensationsprodukten;
iii) Isoethionaten;
iv) N-Methyltauraten;
v) Sulfosuccinaten;
vi) Sulfosuccinamaten;
vii) B-Alkoxyalkansulfonaten;
viii) Disulfonaten;
ix) Alkali- oder Erdalkalimetallsalzen von Lignosulfonaten;
x) ethoxylierten Derivaten der oben erwähnten anionischen grenzflächenaktiven Mittel; und
xi) Gemischen davon.

6. Trockenausbreitbare, wasserdispergierbare granuläre Zusammensetzung nach Anspruch 2, wobei das nichtionische grenzflächenaktive Mittel ausgewählt ist aus der Gruppe bestehend aus
A) Amiden, wie:
i) Alkanolamiden der Formel 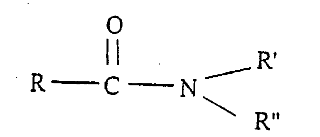 worin R' und R" je -H, -CH₂CH₂OH oder 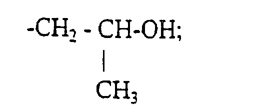 bedeuten;
ii) ethoxylierten Alkanolamiden der Formel 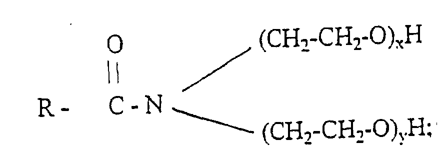 und
iii) Ethylenbisamiden der Formel 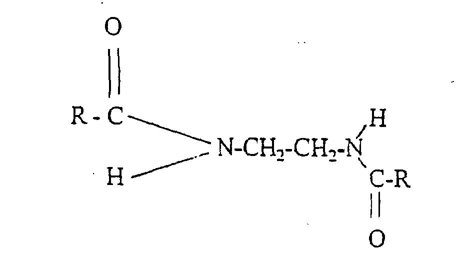
B) Estern, wie:
i) Fettsäureestern der Formel 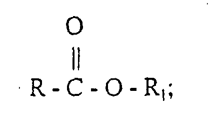
ii) Glycerinestern der Formel 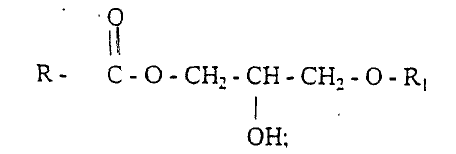
iii) ethoxylierten Fettsäureestern der Formel 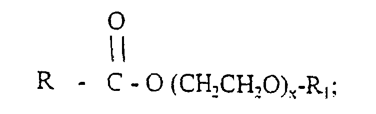
iv) Sorbitanestern der Formel 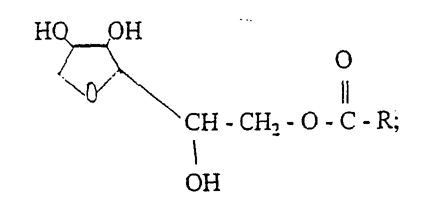 und
v) ethoxylierten Sorbitanestern der Formel 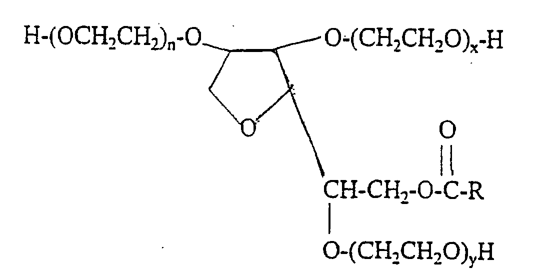
C) Ethoxylaten, wie:
i) Alkylphenolethoxylaten der Formel 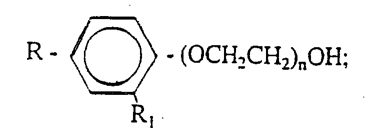
ii) Alkoholethoxylaten der Formel
R-O- (CH₂CH₂O)ₙH;
iii) Tristyrylphenolethoxylaten der Formel 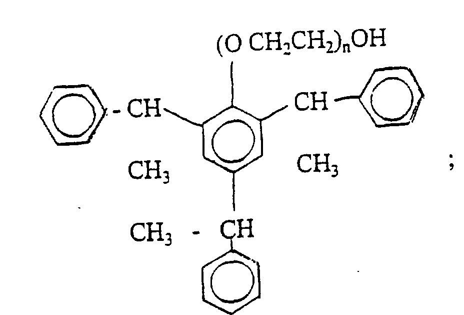 und
iv) Mercaptanethoxylaten der Formel
R-S-(CH₂CH₂O)ₙH
D) am Ende umgesetzten und EO/PO-Blockcopolymeren, wie:
i) Alkoholalkoxylaten der Formel 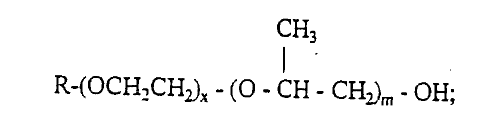
ii) Ethylenoxid/Propylenoxid-Blockcopolymeren der Formel 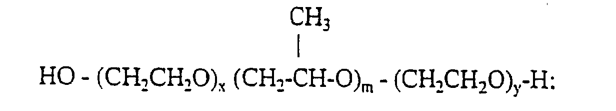
iii) Copolymere der Formel 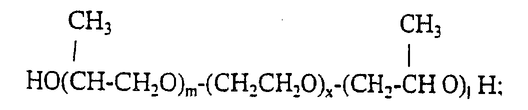
iv) Ethoxylaten mit terminalem Chlor der Formel
R-(OCH₂CH₂)ₓCl;
v) tetrafunktionellen Blockcopolymeren der Formel 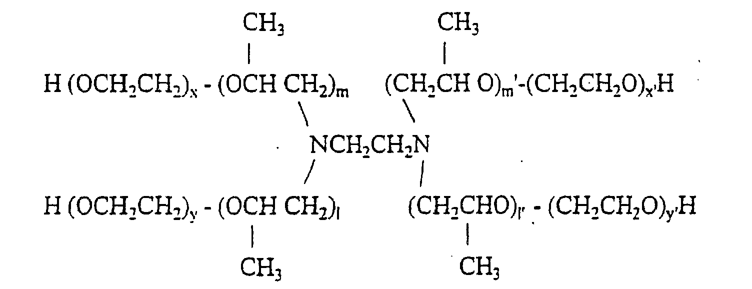 oder 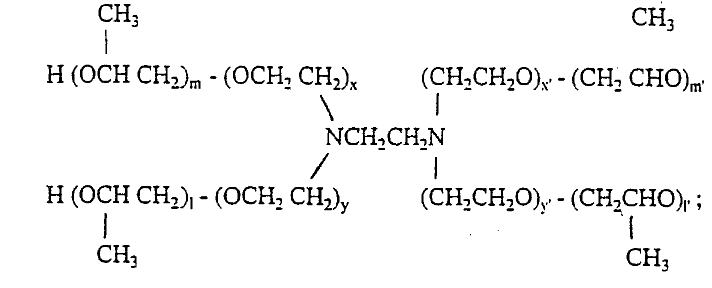 und
E) Gemischen davon, worin:
R eine Fettalkylgruppe, bevorzugt eine C₆-C₂₂-Fettalkylgruppe, am meisten bevorzugt eine C₈-C₁₈-Fettalkylgruppe bedeutet;
R₁ -H oder eine Fettalkylgruppe, bevorzugt eine -H oder C₆-C₂₂-Fettalkylgruppe, am meisten bevorzugt -H oder eine C₈-C₁₈-Fettalkylgruppe bedeutet;
x, x',y, y' und n je unabhängig Mole von Ethylenoxid, bevorzugt 1 bis 300, am meisten bevorzugt 150 bedeuten;
m, m', l und l' je unabhängig die Mole von Propylenoxid, bevorzugt 1 bis 300, am meisten bevorzugt 1 bis 150, bedeuten.

7. Trockenausbreitbare, wasserdispergierbare granuläre Zusammensetzung nach Anspruch 1, wobei die Aktivkohle eine interne Oberfläche von über 400 Quadratmeter pro Gramm und einen mittleren Porendurchmesser von weniger als 50 Angström besitzt.

8. Trockenausbreitbare, wasserdispergierbare granuläre Zusammensetzung nach Anspruch 1, umfassend:
a) von 80 bis 95 Gew.-% Aktivkohle;
b) von 3 bis 10 Gew.-% Alkylnaphthalinsulfonat-Formaldehyd-Kondensat;
c) von 1 bis 5 Gew.-% Alkylnaphthalinsulfonat; und
d) von 1 bis 5 Gew.-% Tristyrylphenolethoxylat.

9. Trockenausbreitbare, wasserdispergierbare granuläre Zusammensetzung nach Anspruch 8, wobei sie zusätzlich umfasst:
1 bis 6 Gew.-% eines nichtionischen Ethylenoxid/ Propylenoxid-Blockcopolymeren.

10. Verfahren zur Herstellung einer trockenausbreitbaren, wasserdispergierbaren granulären Zusammensetzung, umfassend die Stufen:
i) Vermischen von
a) 60 bis 95 Gew.-% Aktivkohle mit einer internen Oberfläche von über 300 Quadratmeter pro Gramm und einem mittleren Porendurchmesser von weniger als 400 Angström mit
b) von 5 bis 40 Gew.-% einer Zusammensetzung aus grenzflächenaktiven Mitteln, umfassend grenzflächenaktive Mittel aus der Gruppe bestehend aus nichtionischen, anionischen grenzflächenaktiven Mitteln und Gemischen davon:
ii) Zugabe von ausreichend Wasser unter kontinuierlichem Mischen unter Bildung eines Gemisches mit einem Feuchtigkeitsgehalt von 15 bis 25 Gew.-%;
iii) Zugabe von 10 bis 40 Gew.-% von zusätzlichem Wasser zu dem Gemisch zur Bildung einer semikohäsiven nassen Masse;
iv) Bildung eines Extrudats durch Extrudieren der nassen Masse durch einen Extruder mit Öffnungen mit Durchmessern von 0,8 mm bis 2,0 mm; und
v) Trocknen des Extrudats bis zu einem Feuchtigkeitsgehalt unter 4 Gew.-%, wobei alle Gew.-% auf das Gesamtgewicht der Zusammensetzungen bei den entsprechenden Stufen des Verfahrens bezogen sind.

11. Verfahren zur Reduzierung der unerwünschten Bioaktivität an einer Stelle, die mit einer organischen Verbindung kontaminiert ist, umfassend die Stufen:
i) Ausbreiten auf der Stelle einer Bioaktivität-verringernden effektiven Menge der granulären Zusammensetzung von Anspruch 1; und
ii) Inkontaktbringen der granulären Zusammensetzung mit Wasser.

12. Verfahren nach Anspruch 11, wobei die organische Verbindung ein Pestizid ist.

13. Verfahren nach Anspruch 12, wobei die Zusammensetzung an grenzflächenaktivem Mittel umfasst:
i) von 3 bis 20 Gew.-% eines nichtionischen oder anionischen grenzflächenaktiven Dispersionsmittels mit hohem Molekulargewicht;
ii) von 2 bis 20 Gew.-% eines nichtionischen oder anionischen grenzflächenaktiven Wiederbenetzungsmittels mit niedrigem Molekulargewicht; und
iii) von 0 bis 10 Gew.-% eines Bindemittels.

14. Verfahren nach Anspruch 13, wobei das Bindemittel umfasst:
i) ein nichtionisches oder anionisches grenzflächenaktives Dispersionsmittel mit hohem Molekulargewicht; oder
ii) ein nichtionisches oder anionisches grenzflächenaktives Wiederbenetzungsmittel mit niedrigem Molekulargewicht.

15. Verfahren nach Anspruch 13, wobei:
i) das grenzflächenaktive Dispersionsmittel ein anionisches Mittel mit hohem Molekulargewicht ist; und
ii) das grenzflächenaktive Wiederbenetzungsmittel ein anionisches Mittel mit niedrigem Molekulargewicht ist.

16. Verfahren nach Anspruch 13, wobei das anionische grenzflächenaktive Mittel ausgewählt wird aus der Gruppe bestehend aus:
i) Alkyl- und Alkylethersulfaten;
ii) wasserlöslichen Salzen der Formel:
R₁-SO₃-M,
wobei R₁ ausgewählt wird aus der Gruppe bestehend aus
i) einer geradkettigen oder verzweigtkettigen, gesättigten aliphatischen Kohlenwasserstoffgruppe mit 8 bis 24, bevorzugt 12 bis 18 Kohlenstoffatomen;
ii) einem mono-, di- oder tri-C₁-C₆-alkylsubstituiertem Aryl, wobei das Aryl bevorzugt eine Phenyl- oder Naphthylgruppe ist;
iii) alpha-Olefinen mit 12 bis 24 Kohlenstoffatomen, bevorzugt 14 bis 16 geradkettigen Kohlenstoffatomen, am meisten bevorzugt 1-Dodecen, 1-Tetradecen, 1-Hexadecen, 1-Octadecen, 1-Eicosen und 1-Tetracosen; und
iv) Naphthalin-Formaldehyd-Kondensationsprodukten;
iii) Isoethionaten;
iv) N-Methyltauraten;
v) Sulfosuccinaten;
vi) Sulfosuccinamaten;
vii) B-Alkoxyalkansulfonaten;
viii) Disulfonaten;
ix) Alkali- oder Erdalkalimetallsalzen von Lignosulfonaten;
x) ethoxylierten Derivaten der oben erwähnten anionischen grenzflächenaktiven Mittel; und
xi) Gemischen davon.

17. Verfahren nach Anspruch 13, wobei das nichtionische grenzflächenaktive Mittel ausgewählt ist aus der Gruppe bestehend aus:
A) Amiden, wie:
i) Alkanolamiden der Formel 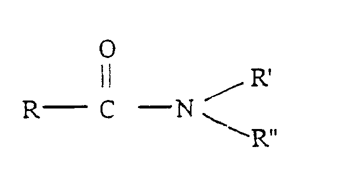 worin R' und R" je -H,-CH₂CH₂OH oder 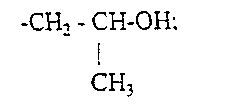 bedeuten;
ii) ethoxylierten Alkanolamiden der Formel 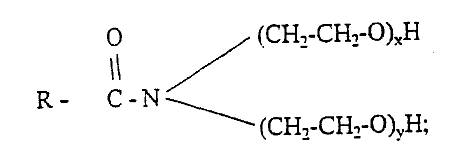 und
iii) Ethylenbisamiden der Formel 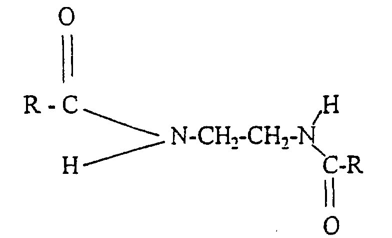
B) Estern, wie:
i) Fettsäureestern der Formel 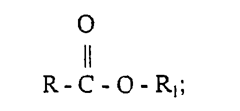
ii) Glycerinestern der Formel 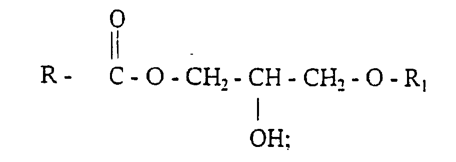
iii) ethoxylierten Fettsäureestern der Formel 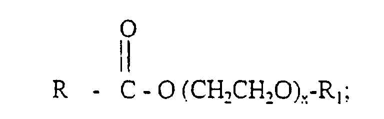
iv) Sorbitanestern der Formel 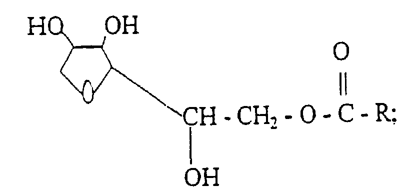 und
v) ethoxylierten Sorbitanestern der Formel 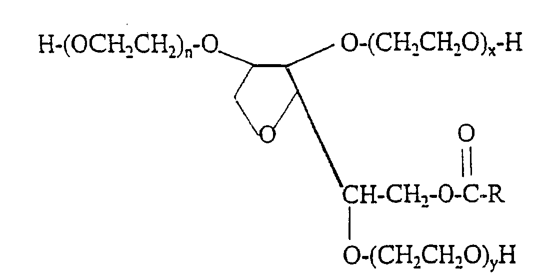
C) Ethoxylaten, wie:
i) Alkylphenolethoxylaten der Formel 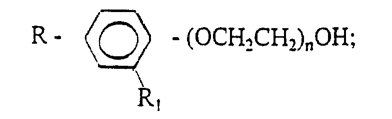
ii) Alkoholethoxylaten der Formel
R-O-(CH₂CH₂O)ₙH;
iii) Tristyrylphenolethoxylaten der Formel 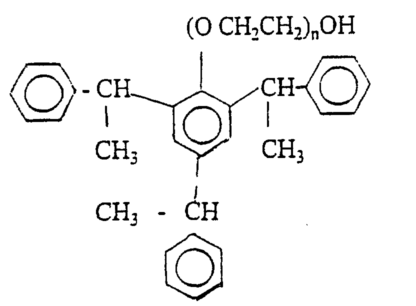 und
iv) Mercaptanethoxylaten der Formel
R-S-(CH₂CH₂O)ₙH
D) am Ende umgesetzten und EO/PO-Blockcopolymeren, wie:
i) Alkoholalkoxylaten der Formel 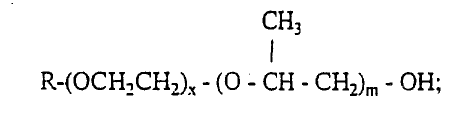
ii) Ethylenoxid/Propylenoxid-Blockcopolymeren der Formel 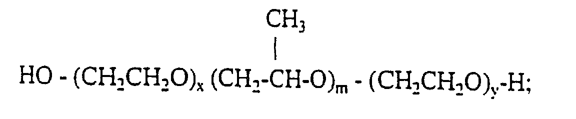
iii) Copolymeren der Formel 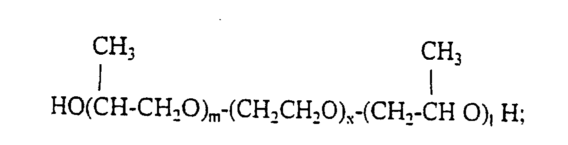
iv) Ethoxylaten mit terminalem Chlor der Formel
R- (OCH₂CH₂)ₓCl;
v) tetrafunktionellen Blockcopolymeren der Formel 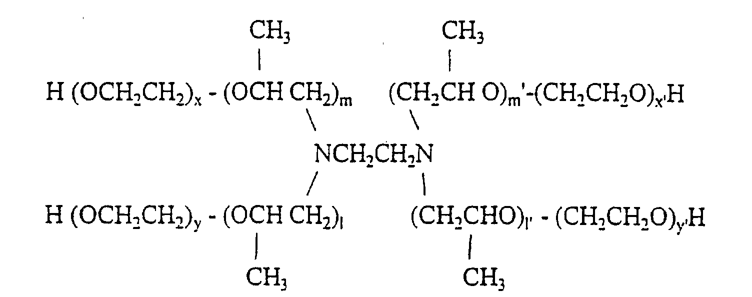 oder 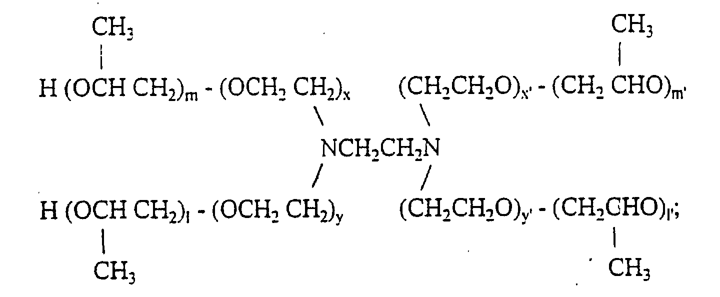
E) Gemischen davon, worin:
R eine Fettalkylgruppe, bevorzugt eine C₆-C₂₂-Fettalkylgruppe, am meisten bevorzugt eine C₈-C₁₈-Fettalkylgruppe bedeutet;
R₁ -H oder eine Fettalkylgruppe, bevorzugt eine -H oder C₆-C₂₂-Fettalkylgruppe, am meisten bevorzugt -H oder eine C₈-C₁₈-Fettalkylgruppe bedeutet;
x, x',y, y' und n je unabhängig Mole von Ethylenoxid, bevorzugt 1 bis 300, am meisten bevorzugt 1 bis 150 bedeuten;
m, m', l und l' je unabhängig die Mole von Propylenoxid, bevorzugt 1 bis 300, am meisten bevorzugt 1 bis 150, bedeuten.

18. Verfahren nach Anspruch 11, wobei die Aktivkohle eine interne Oberfläche von über 400 Quadratmeter pro Gramm und einen mittleren Porendurchmesser von weniger als 50 Angström besitzt.

19. Verfahren nach Anspruch 11, wobei die Zusammensetzung verwendet wird, die in Anspruch 8 definiert ist.

20. Verfahren nach Anspruch 19, wobei die granuläre Zusammensetzung zusätzlich umfasst:
von 1 bis 6 Gew.-% eines nichtionischen Ethylenoxid/Propylenoxid-Blockcopolymeren.

## Revendications

1. Composition granulaire dispersable dans l'eau, épandable à sec, comprenant :
a) de 60 à 95% en poids de charbon activé ayant une aire superficielle interne supérieure à 300 m²/g et un diamètre de pore moyen inférieur à 100 angströms; et
b) de 5 à 40% en poids d'une composition tensioactive comprenant un agent tensioactif choisi dans le groupe comprenant les composés non ioniques, les composés anioniques et leurs combinaisons, dans laquelle les % en poids sont basés sur le poids total de la composition granulaire.

2. Composition granulaire dispersable dans l'eau, épandable à sec suivant la revendication 1, dans laquelle la composition tensioactive comprend :
i) de 3 à 20% en poids d'un dispersant tensioactif non ionique ou anionique de poids moléculaire élevé;
ii) de 2 à 20% en poids d'un agent de remouillage tensioactif non ionique ou anionique de bas poids moléculaire; et
iii) de 0 à 10% en poids d'un liant.

3. Composition granulaire dispersable dans l'eau, épandable à sec suivant la revendication 2, dans laquelle le liant comprend :
i) un dispersant tensioactif non ionique ou anionique de poids moléculaire élevé, ou
ii) un agent de remouillage tensioactif non ionique ou anionique de bas poids moléculaire.

4. Composition granulaire dispersable dans l'eau, épandable à sec suivant la revendication 2, dans laquelle :
i) le dispersant tensioactif est un composé anionique de poids moléculaire élevé; et
ii) l'agent de remouillage tensioactif est un composé anionique de bas poids moléculaire.

5. Composition granulaire dispersable dans l'eau, épandable à sec suivant la revendication 2, dans laquelle l'agent tensioactif anionique est choisi dans le groupe comprenant :
i) les alkyl et alkyl éthers sulfates;
ii) les sels solubles dans l'eau de la formule :
R₁ - SO₃ - M
dans laquelle R₁ est choisi dans le groupe comprenant :
i) un radical hydrocarboné aliphatique saturé, à chaîne droite ou ramifiée comportant de 8 à 24, avantageusement de 12 à 18 atomes de carbone;
ii) un groupe aryle mono-, di- ou trialkyl(C₁-C₆)-substitué dans lequel le groupe aryle est avantageusement un groupe phényle ou naphtyle;
iii) les alpha-oléfines comportant 12 à 24 atomes de carbone, avantageusement 14 à 16 atomes de carbone en chaîne droite, le plus avantageusement le 1-dodécène, le 1-tétradécène, le 1-hexadécène, le 1-octadécène, le 1-éicosène et le 1-tétracosène; et
iv) les produits de condensation de naphtalène-formaldéhyde;
iii) les iséthionates;
iv) les N-méthyl taurates;
v) les sulfosuccinates;
vi) les sulfosuccinamates;
vii) les β-alcoxy alcane sulfonates;
vii) les disulfonates;
ix) les sels de métal alcalin ou alcalino-terreux de lignosulfonates;
x) les dérivés éthoxylés des agents tensioactifs anioniques susmentionnés; et
xi) leurs mélanges.

6. Composition granulaire dispersable dans l'eau, épandable à sec suivant la revendication 2, dans laquelle l'agent tensioactif non ionique est choisi dans le groupe comprenant :
A) les amides tels que :
i) les alcanolamides de la formule : 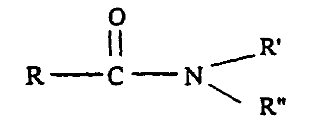 dans laquelle R' et R" peuvent chacun être -H, -CH₂CH₂OH ou 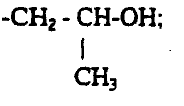
ii) les alcanolamides éthoxylés de la formule: 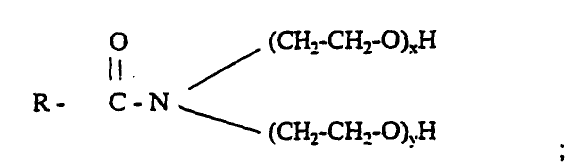 et
iii) les éthylène bisamides de la formule : 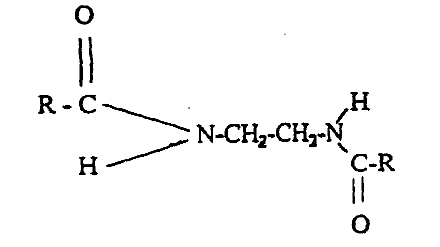
B) les esters tels que :
i) les esters d'acide gras de la formule : 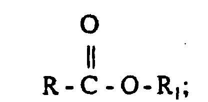
ii) les esters de glycérol de la formule : 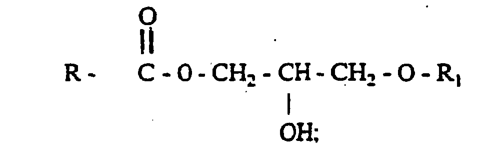
iii) les esters d'acide gras éthoxylés de la formule : 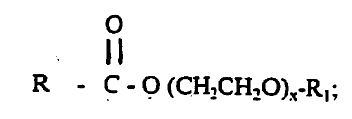
iv) les esters de sorbitane de la formule : 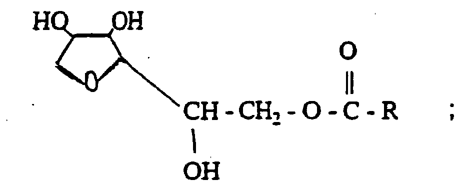 et
v) les esters de sorbitane éthoxylés de la formule : 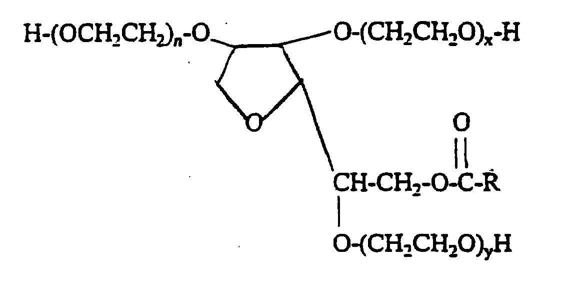
C) les éthoxylates tels que :
i) les éthoxylates d'alkylphénol de la formule : 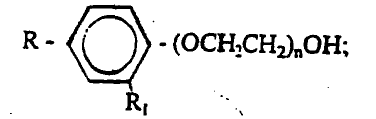
ii) les éthoxylates d'alcool de la formule :
R - O-(CH₂CH₂O)ₙH;
iii) les éthoxylates de tristyrylphénol de la formule : 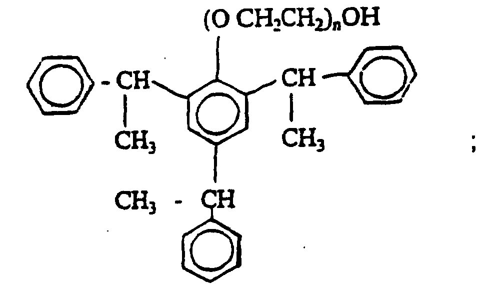 et
iv) les éthoxylates de mercaptan de la formule :
R - S - (CH₂CH₂O)ₙH
les copolymères coiffés et blocs d'OE/OP tels que :
i) les alcoxylates d'alcool de la formule : 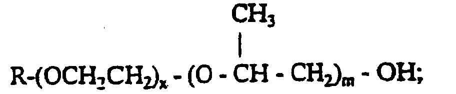
ii) les copolymères blocs d'oxyde d'éthylène/oxyde de propylène de la formule : 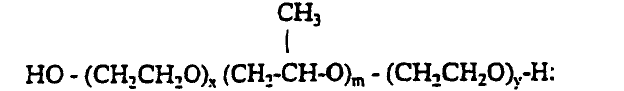
iii) les copolymères de la formule : 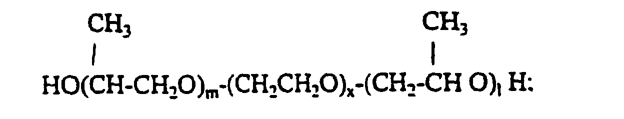
iv) les éthoxylates coiffés de chlore de la formule :
R-(OCH₂CH₂)ₓCl;
v) les copolymères blocs tétrafonctionnels de la formule : 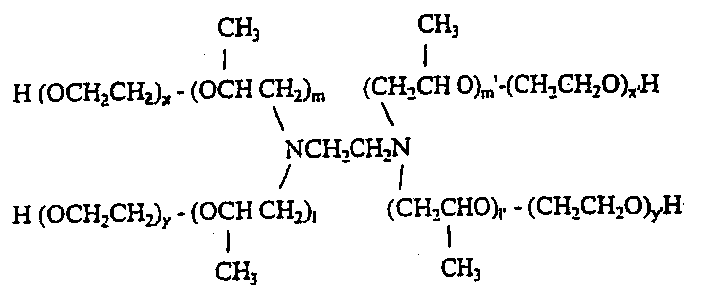 ou 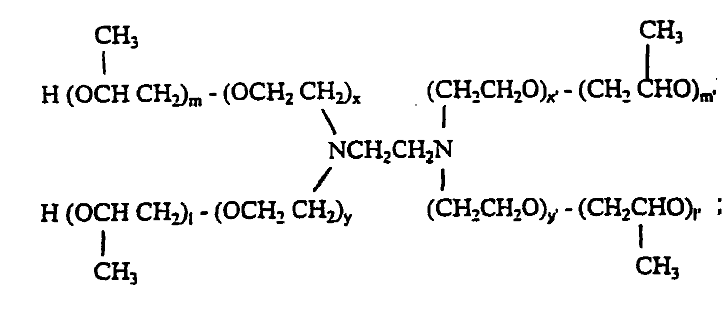 et
E) leurs mélanges;
dans lesquels :
R est un groupe alkyle gras, avantageusement un groupe alkyle gras en C₆-C₂₂, le plus avantageusement un groupe alkyle gras en C₈-C₁₈;
R₁ est -H ou un groupe alkyle gras, avantageusement -H ou un groupe alkyle gras en C₆-C₂₂, le plus avantageusement -H ou un groupe alkyle gras en C₈-C₁₈;
x, x', y, y' et n représentent chacun indépendamment des moles d'oxyde d'éthylène, avantageusement 1 à 300, le plus avantageusement 1 à 150;
m, m', I et I' représentent chacun indépendamment des moles d'oxyde de propylène, avantageusement 1 à 300, le plus avantageusement 1 à 150.

7. Composition granulaire dispersable dans l'eau, épandable à sec suivant la revendication 1, dans laquelle le charbon activé a une aire superficielle interne supérieure à 400 m²/g et un diamètre de pore moyen inférieur à 50 angströms.

8. Composition granulaire dispersable dans l'eau, épandable à sec suivant la revendication 1 comprenant :
a) de 80 à 95% en poids du charbon activé;
b) de 3 à 10% en poids de condensat d'alkylnaphtalènesulfonate-formaldéhyde;
c) de 1 à 5% en poids d'alkylnaphtalènesulfonate; et
d) de 1 à 5% en poids d'éthoxylate de tristyrylphénol.

9. Composition granulaire dispersable dans l'eau, épandable à sec suivant la revendication 8, comprenant de plus :
de 1 à 6% en poids d'un copolymère bloc d'oxyde d'éthylène/oxyde de propylène, non ionique.

10. Procédé de préparation d'une composition granulaire dispersable dans l'eau, épandable à sec comprenant les étapes suivantes :
i) le mélange
a) de 60 à 95% en poids de charbon activé ayant une aire superficielle interne supérieure à 300 m²/g et un diamètre de pore moyen inférieur à 400 angströms avec
b) de 5 à 40% en poids d'une composition tensioactive comprenant des agents tensioactifs choisis dans le groupe comprenant les composés non ioniques, les composés anioniques et leurs combinaisons;
ii) l'addition de suffisamment d'eau tout en mélangeant de façon continue pour former un mélange avec une teneur en humidité de 15 à 25% en poids;
iii) l'addition de 10 à 40% en poids d'eau additionnelle audit mélange pour former une masse humide semi-cohésive;
iv) la formation d'un extrudat en extrudant ladite masse humide par une filière d'extrudeuse comportant des ouvertures avec des diamètres de 0,8 mm à 2,0 mm; et
v) le séchage de l'extrudat à une teneur en humidité en dessous de 4% en poids;
dans laquelle tous les % en poids sont pris par rapport au poids total des compositions à l'étape respective dans le procédé.

11. Procédé de réduction d'une bioactivité indésirable dans un site contaminé avec un composé organique comprenant les étapes suivants :
i) l'épandage sur le site d'une quantité efficace permettant de réduire la bioactivité de la composition granulaire de la revendication 1; et
ii) la mise en contact de ladite composition granulaire avec de l'eau.

12. Procédé suivant la revendication 11, dans lequel le composé organique précité est un pesticide.

13. Procédé suivant la revendication 12, dans lequel la composition tensioactive précitée comprend :
i) de 3 à 20% en poids d'un dispersant tensioactif non ionique ou anionique de poids moléculaire élevé;
ii) de 2 à 20% en poids d'un agent de remouillage tensioactif non ionique ou anionique de bas poids moléculaire; et
iii) de 0 à 10% en poids d'un liant.

14. Procédé suivant la revendication 13, dans lequel le liant précité comprend :
i) un dispersant tensioactif non ionique ou anionique de poids moléculaire élevé, ou
ii) un agent de remouillage tensioactif non ionique ou anionique de bas poids moléculaire.

15. Procédé suivant la revendication 13, dans lequel :
i) le dispersant tensioactif est un composé anionique de poids moléculaire élevé; et
ii) l'agent de remouillage tensioactif est un composé anionique de bas poids moléculaire.

16. Procédé suivant la revendication 13, dans lequel l'agent tensioactif anionique est choisi dans le groupe comprenant :
i) les alkyl et alkyl éthers sulfates;
ii) les sels solubles dans l'eau de la formule :
R₁-SO₃-M
dans laquelle R₁ est choisi dans le groupe comprenant :
i) un radical hydrocarboné aliphatique saturé, à chaîne droite ou ramifiée comportant de 8 à 24, avantageusement de 12 à 18 atomes de carbone;
ii) un groupe aryle mono-, di- ou trialkyl(C₁-C₆)-substitué dans lequel le groupe aryle est avantageusement un groupe phényle ou naphtyle;
iii) les alpha-oléfines comportant 12 à 24 atomes de carbone, avantageusement 14 à 16 atomes de carbone en chaîne droite, le plus avantageusement le 1-dodécène, le 1-tétradécène, le 1-hexadécène, le 1-octadécène, le 1-éicosène et le 1-tétracosène; et
iv) les produits de condensation de naphtalène-formaldéhyde;
iii) les iséthionates;
iv) les N-méthyl taurates;
v) les sulfosuccinates;
vi) les sulfosuccinamates;
vii) les β-alcoxy alcane sulfonates;
vii) les disulfonates;
ix) les sels de métal alcalin ou alcalino-terreux de lignosulfonates;
x) les dérivés éthoxylés des agents tensioactifs anioniques susmentionnés; et
xi) leurs mélanges.

17. Procédé suivant la revendication 13, dans lequel l'agent tensioactif non ionique est choisi dans le groupe comprenant :
A) les amides tels que :
i) les alcanolamides de la formule : 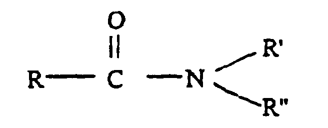 dans laquelle R' et R" peuvent chacun être -H, -CH₂CH₂OH ou 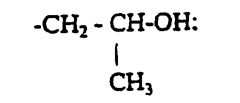
ii) les alcanolamides éthoxylés de la formule: 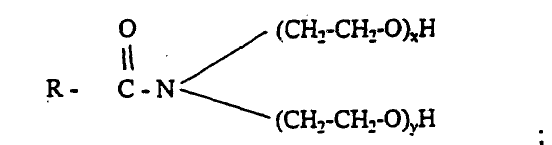 et
iii) les éthylène bisamides de la formule : 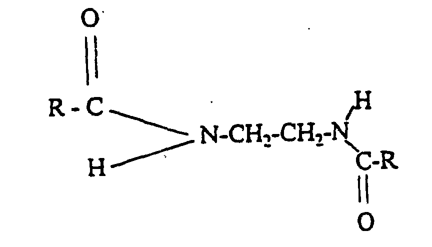
B) les esters tels que :
i) les esters d'acide gras de la formule : 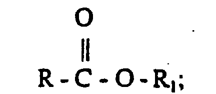
ii) les esters de glycérol de la formule : 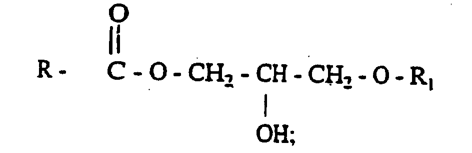
iii) les esters d'acide gras éthoxylés de la formule : 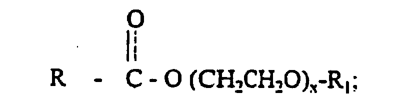
iv) les esters de sorbitane de la formule : 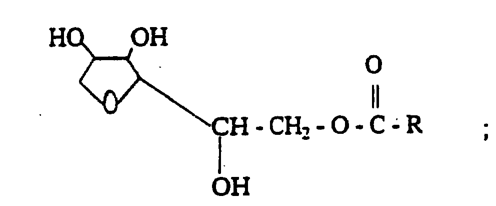 et
v) les esters de sorbitane éthoxylés de la formule : 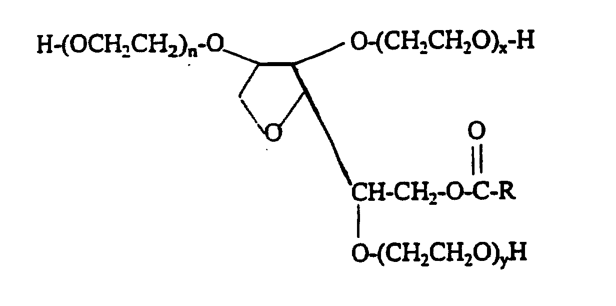
C) les éthoxylates tels que :
i) les éthoxylates d'alkylphénol de la formule : 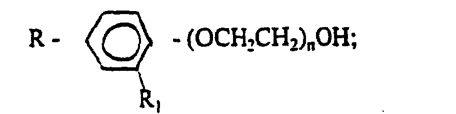
ii) les éthoxylates d'alcool de la formule :
R - O - (CH₂CH₂O)ₙH;
iii) les éthoxylates de tristyrylphénol de la formule 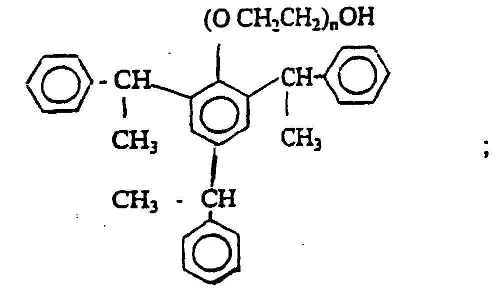 et
iv) les éthoxylates de mercaptan de la formule :
R-S-(CH₂CH₂O)ₙH
D) les copolymères coiffés et blocs d'OE/OP tels que :
i) les alcoxylates d'alcool de la formule : 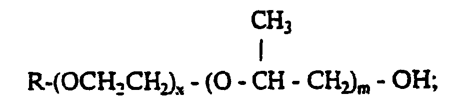
ii) les copolymères blocs d'oxyde d'éthylène/oxyde de propylène de la formule : 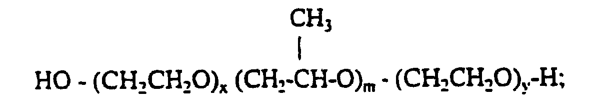
iii) les copolymères de la formule : 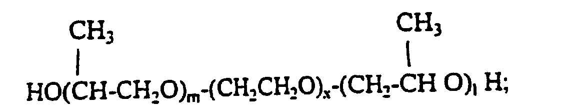
iv) les éthoxylates coiffés de chlore de la formule :
R - (OCH₂CH₂)ₓCl;
v) les copolymères blocs tétrafonctionnels de la formule : 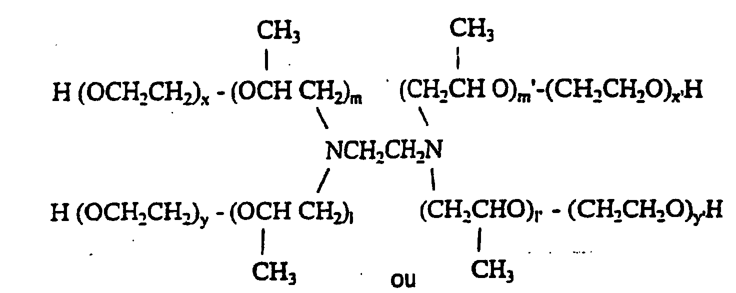 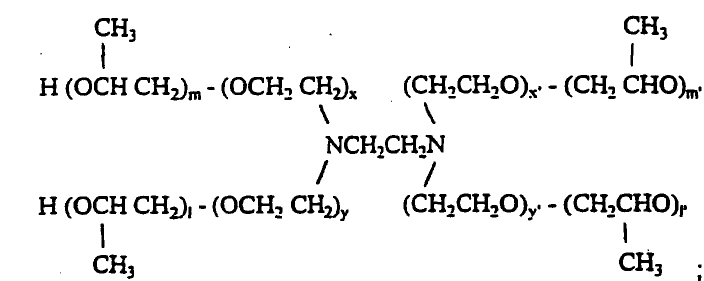 et
E) leurs mélanges;
dans lesquels :
R est un groupe alkyle gras, avantageusement un groupe alkyle gras en C₆-C₂₂, le plus avantageusement un groupe alkyle gras en C₈-C₁₈;
R₁ est -H ou un groupe alkyle gras, avantageusement -H ou un groupe alkyle gras en C₆-C₂₂, le plus avantageusement -H ou un groupe alkyle gras en C₈-C₁₈;
x, x', y, y' et n représentent chacun indépendamment des moles d'oxyde d'éthylène, avantageusement 1 à 300, le plus avantageusement 1 à 150;
m, m', I et l' représentent chacun indépendamment des moles d'oxyde de propylène, avantageusement 1 à 300, le plus avantageusement 1 à 150.

18. Procédé suivant la revendication 11, dans lequel le charbon activé a une aire superficielle interne supérieure à 400 m²/g et un diamètre de pore moyen inférieur à 50 angströms.

19. Procédé suivant la revendication 11, dans lequel la composition est telle que définie à la revendication 8.

20. Procédé suivant la revendication 19, dans lequel la composition granulaire comprend de plus de 1 à 6% en poids d'un copolymère bloc d'oxyde d'éthylène/oxyde de propylène, non ionique.
